# EUROPÄISCHE PATENTSCHRIFT

(11) **EP 1 000 492 B1**
(45) Veröffentlichungstag und Bekanntmachung des Hinweises auf die Patenterteilung: **21.12.2005**
(21) Anmeldenummer: 98943678.7
(22) Anmeldetag: 13.07.1998
(51) Int. Cl.: H04L 27/227

(54) **VERFAHREN UND ANORDNUNGEN ZUM SCHNELLEN SYNCHRONISIEREN ZWEIER TRÄGERSIGNALE**
METHOD AND DEVICE FOR THE RAPID SYNCHRONIZATION OF TWO CARRIER SIGNALS
PROCEDE ET DISPOSITIFS POUR SYNCHRONISER DEUX SIGNAUX PORTEURS

(30) Priorität: 30.07.1997 DE 19732894
(43) Veröffentlichungstag der Anmeldung: 17.05.2000
(73) Patentinhaber: SIEMENS AKTIENGESELLSCHAFT, 80333 München (DE)
(72) Erfinder: ZIRWAS, Wolfgang, D-82194 Gröbenzell (DE)
(86) Internationale Anmeldenummer: PCT/DE1998/001953
(87) Internationale Veröffentlichungsnummer: WO 1999/007098

(56) Entgegenhaltungen:
- EP-A- 0 760 567
- US-A- 3 984 777
- US-A- 4 095 187
- US-A- 4 757 272
- US-A- 5 014 283

## Beschreibung

Die zunehmende Nutzerakzeptanz sowie der technologische Fortschritt bei der Entwicklung neuer Breitbanddienste - auch als Multimedia-Dienste bezeichnet - führen zu einem zunehmenden Bedarf an breitbandigen Übertragungsressourcen in bereits bestehenden oder neu zu installierenden Kommunikationsnetzen. Um breitbandige Anwendungen, insbesondere hohe Datenübertragungsraten beanspruchende Multimedia-Dienste - z.B. "Video on Demand", Videokonferenz, Teleshopping oder Telebanking - effektiv und wirtschaftlich zu realisieren, ist ein breitbandiges Kommunikationsnetz, insbesondere ein breitbandiges Zubringernetz erforderlich. In aktuell installierten Zubringernetzen werden die zur Verfügung stehenden Netz-Ressourcen auf an das Kommunikationsnetz angeschlossene Netzabschlußeinheiten bzw. auf die mit den Netzabschlußeinheiten verbundenen Kommunikationsendgeräte aufgeteilt. Dabei wird der Zugriff der Netzabschlußeinheiten bzw. der Kommunikationsendgeräte auf das gemeinsam genutzte Übertragungsmedium - z.B. Lichtwellenleiter oder Funkkanal - durch ein Übertragungsverfahren derart gesteuert, daß jeweils nur einer Netzabschlußeinheit bzw. einem Kommunikationsendgerät zumindest temporär die Zugriffsberechtigung erteilt wird.

Bei einem durch drahtlose Funkkanäle realisierten Zubringernetz sind mehrere Netzabschlußeinheiten - auch als Network Termination bezeichnet - an eine zentral in einer Funkzelle angeordnete Basisstation - auch als Radio Base Station bezeichnet - angeschlossen. Die im Zubringernetz zur Verfügung stehende Datenübertragungsrate - z.B. eine Summenbitrate von 155 Mbit/s - wird dabei auf die aktuell mit der Basisstation verbundenen Netzabschlußeinheiten aufgeteilt. In aktuellen drahtlosen Zubringernetzen werden für die in Richtung Netzabschlußeinheiten - auch als Downstream-Richtung bezeichnet - zu übertragenden Daten und für die von den Netzabschlußeinheiten an die Basisstation - auch als Upstream-Richtung bezeichnet - zu übertragenden Daten unterschiedliche, an die jeweils benötigten Datenübertragungsraten angepaßte Übertragungsverfahren eingesetzt. Ein für die in Upstream-Richtung zu übertragenden Daten bzw. zu übertragende Datenströme eingesetztes Übertragungsverfahren stellt das Zeitmultiplex- bzw. Time-Division-Multiple-Access Zugriffs-Verfahren - auch als TDMA-Verfahren bezeichnet - dar. Bei diesem Übertragungsverfahren werden von den Netzabschlußeinheiten abwechselnd kurze Singalfolgen - auch als Signal-Bursts bezeichnet - an die Basisstation gesendet. Der Zugriff auf das Übertragungsmedium bzw. auf den Funkkanal wird von der Basisstation derart gesteuert, daß jeweils nur eine Netzabschlußeinheit Informationen bzw. einen Signal-Burst an die Basisstation sendet.

In bestehenden Zubringernetzen mit Lichtwellenleiter-Übertragung, beispielsweise in einem SOAP-System - Siemens Optical Advanced PON - wird jeweils durch eine Netzabschlußeinheit ein 60 Byte digitalisierte Daten umfassender Signal-Burst bzw. ein 60 Byte Daten umfassender Daten-Rahmen - im folgenden auch als SOAP-Datenrahmen bezeichnet - in Upstream-Richtung übertragen. Die Präambel jedes SOAP-Datenrahmens umfaßt 7 Byte, wobei 40 Bit der 7 Byte Daten umfassenden Präambel als Synchronisierbits für die Bestimmung der Signalparameter des auf der Empfängerseite eintreffenden Signal-Bursts vorgesehen sind. Die Bestimmung der Signalparameter, d.h. die Bestimmung der Amplitude sowie der Träger- und Taktphase innerhalb der für die Synchronisierung - hier 40 Bit - zur Verfügung stehenden Zeit wird auch als "Runin" bezeichnet. Vorteilhaft werden bei drahtlosen, Funkkanäle aufweisenden Zubringernetzen die von den Netzabschlußeinheiten an die Basisstation zu übermittelnden Daten, d.h. die zu übertragenden SOAP-Datenrahmen mittels eines kohärenten Modulationsverfahrens - üblicherweise durch ein Phasenmodulationsverfahren, auch als Phase Shift Keying PSK bezeichnet - auf ein Trägersignal mit vorgegebener Frequenz moduliert. Als vorteilhaftes Modulationsverfahren zur Übertragung digital vorliegender Daten über Funkkanäle hat sich die Offset-Quadratur-Vierphasenumtastung - auch als Offset-Quadratur-Phase-Shift-Keying OQPSK bezeichnet - erwiesen. Da die einzelnen jeweils zu unterschiedlichen Zeitpunkten einen Signal-Burst aussendenden Netzabschlußeinheiten unterschiedliche Entfernungen zur Basisstation aufweisen, muß für jeden an der Basisstation eintreffenden Signal-Burst jeweils die Amplitude sowie die Träger- und Taktphase während des "Runins" bestimmt werden. Für die Realisierung eines Funksystems mit einer Summenbitrate von beispielsweise 155 Mbit/s steht somit nur ein sehr kurzes Zeitintervall von 258 ns während des "Runins" - entspricht der Zeitdauer zur Übertragung der 40 Synchronisier-Bits des SOAP-Datenrahmens - zur Bestimmung der Singalparameter von an der Basisstation eintreffenden Signal-Bursts zur Verfügung. Für eine optimale Demodulation der über einen Funkkanal übermittelten Daten muß insbesondere die Trägerphase des burstartig übermittelten Trägersignals sehr genau bestimmt und eine Synchronisierung für die Demodulation herbeigeführt werden.

In US 4 095 187 ist ein Demodulator für phasenmodulierte Trägersignale beschrieben, bei welchem ein eingehendes erstes analoges, phasenmoduliertes Trägersignal mit einem zweiten, mit Hilfe eines dem Demodulator zugeordneten, spännungsgesteuerten Oszillators erzeugten, analogen Trägersignal synchronisiert wird. Das am Demodulator eingehende, phasenmodulierte Trägersignal wird demoduliert und in Abhängigkeit von dem Demodulationsergebnis das lokal im Demodulator erzeugte zweite Trägersignal moduliert, bzw. "remoduliert". Mit Hilfe eines Phasen-Komparators wird die Phase des eingehenden, phasenmodulierten Trägersignals mit der Phase des remodulierten Trägersignals verglichen und in Abhängigkeit von dem Vergleichsergenis der spannungsgesteuerte Oszillator angesteuert.

Desweiteren ist in US 4 757 272 ein Demodulator zur Regenerierung eines analogen Referenz-Trägersignals und zur Demodulierung eines burstartig ausgesendeten, phasenmodulierten Vierphasen-PSK-Modulationssignals offenbart. Das burstartig ausgesendete Vierphasen-PSK-Modulationssignal weist eine Präambel auf, wobei sendeseitig die Präambel zumindest teilweise mit einem vorgegebenen Modulationssymbol moduliert wird. Zur empfangsseitigen Generierung des Referenz-Trägersignals wird während des Eingangs der Präambel das empfangene Vierphasen-PSK-Modulationssignal mit dem vorgegebenen Modulationssymbol moduliert, d.h. invers moduliert, wobei ein regeneriertes, analoges Trägersignal ohne phasenmodulierte Signalanteile gebildet wird. Das regenerierte Trägersignal wird anschließend sogenannten AFC-Mitteln zugeführt, durch welche unter anderem eine PLL-Schaltungsanordnung realisiert ist. Mit Hilfe der AFC-Mittel wird aus dem regenerierten Trägersignal das frequenz- und phasenkorrigierte Referenz-Trägersignal abgeleitet, welches anschließend an einen orthogonalen Demodulator zur Demodulierung des eingehenden Vierphasen-PSK-Modulationssignal weitergeleitet wird.

Der Erfindung liegt die Aufgabe zugrunde, die Synchronisation für die Demodulation von auf ein burstartig ausgesendetes Trägersignal modulierten Informationen bzw. Daten zu verbessern. Die Aufgabe wird durch die Merkmale der Patentansprüche 1 und 14 gelöst.

Der wesentliche Aspekt des erfindungsgemäßen Verfahrens zum schnellen Synchronisieren eines sendeseitig erzeugten, ersten analogen Trägersignals mit einem in einem Empfänger erzeugten zweiten Trägersignal besteht darin, daß sendeseitig eine Präambel des ersten Trägersignals zumindest teilweise mit einer vorgegebenen Phasenlage und empfangsseitig das zweite Trägersingnal mit der gleichen vorgegebenen Phasenlage moduliert wird. Anschließend wird die Phasendifferenz des modulierten ersten Trägersignals und des modulierten zweiten Trägersignals ermittelt und nach einer Phasendifferenz-Erkennungszeit die Phasenlage des zweiten Trägersignals um die ermittelte Phasendifferenz korrigiert.

Vorteilhaft wird durch das erfindungsgemäße Verfahren die Phasendifferenz zwischen den beiden modulierten Trägersignalen sehr schnell, d.h. innerhalb des nur einen sehr kurzen Zeitraum umfassenden "Runins" - im folgenden auch als Phasendifferenz-Erkennungszeit bezeichnet - erfaßt und bestimmt - beispielsweise innerhalb eines Zeitraums vom 100 bis 200 ns-, wobei nach der Phasendifferenz-Erkennungszeit die Phasenlage des zweiten Trägersignals sehr genau an die Phasenlage des ersten Trägersignals angepaßt ist. Durch die durch das erfindungsgemäße Verfahren ermöglichte sehr schnelle Bestimmung und genaue Anpassung der Trägerphase des zweiten Trägersignals an die Sollphase des ersten Trägersignals wird eine optimale, das heißt eine fehlerminimierte Demodulation der auf das erste Trägersignal modulierten Nutzdaten ermöglicht.

Gemäß einer vorteilhaften Ausgestaltung wird bei einem digital vorliegenden zweiten Trägersignal dieses digital mit der vorgegebenen Phasenlage moduliert und anschließend digital/analog-gewandelt. Die Phasendifferenz der beiden modulierten Trägersignale wird analog ermittelt und nach der Phasendifferenz-Erkennungszeit die Phasenlage des zweiten Trägersignals um die ermittelte Phasendifferenz digital korrigiert - Anspruch 3. Alternativ wird bei einem digital vorliegenden zweiten Trägersignal das erste analoge Trägersignal analog/digital-gewandelt und die Phasendifferenz der beiden modulierten und digitalisierten Trägersignale digital ermittelt. Nach der Phasendifferenz-Erkennungszeit wird die Phasenlage des zweiten Trägersignals um die ermittelte Phasendifferenz digital korrigiert - Anspruch 4. Durch die vorteilhafte digitale Korrektur der Phasenlage des zweiten Trägersignals werden typische Nachteile analoger Verfahren zur Korrektur einer Phasendifferenz - z.B.

Temperatur- und Spannungsdrift, Offset und Abgleichvorgänge - vermieden und somit die Qualität der Demodulation der durch das erste Trägersignal übermittelten Nutzdaten verbessert.

Vorteilhaft werden während der Phasendifferenz-Erkennungszeit die Phasendifferenz repräsentierende Phasen-Signale gebildet, wobei die Werte der Phasen-Signale am Ende der Phasendifferenz-Erkennungszeit gespeichert werden. Nach der Phasendifferenz-Erkennungszeit wird die Phasenlage des zweiten Trägersignals um die durch die gespeicherten Werte der Phasen-Signale repräsentierte Phasendifferenz korrigiert - Anspruch 5. Durch das vorteilhafte Speichern der Werte der Phasen-Signale werden schaltungstechnische und Anordnungsbedingte Einschwingvorgänge während der Phasendifferenz-Erkennungszeit umgangen bzw. abgewartet und somit präzise erfaßte Werte der Phasendifferenz gespeichert, wodurch eventuelle Fehler bei der Korrektur der Phasenlage des zweiten Trägersignals um die ermittelte Phasendifferenz minimiert werden.

Gemäß einer weiteren Ausgestaltung des erfindungsgemäßen Verfahrens wird aus dem zweiten Trägersignal ein digitales, moduliertes zweites Trägersignal abgeleitet, wobei während der Phasendifferenz-Erkennungszeit das digitale, modulierte zweite Trägersignal mit der vorgegebenen Phasenlage und nach der Phasendifferenz-Erkennungszeit das digitale, modulierte zweite Trägersignal mit der um die ermittelte Phasendifferenz korrigierte Phasenlage gebildet wird - Anspruch 9. Während der Phasendifferenz-Erkennungszeit wird das digitale, modulierte zweite Trägersignal mit Hilfe von die vorgegebene Phasenlage repräsentierenden Phasen-Werten und die Phasendifferenz repräsentierende digitale Phasen-Signale gebildet. Am Ende der Phasendifferenz-Erkennungszeit werden die durch die digitalen Phasen-Signale repräsentierten Phasen-Werte gespeichert und aus den gespeicherten Phasen-Werten zusätzliche Phasen-Werte abgeleitet und gespeichert. Nach der Phasendifferenz-Erkennungszeit wird das digitale, modulierte zweite Trägersignal mit Hilfe der gespeicherten Phasen-Werte und der gespeicherten zusätzlichen Phasen-Werte gebildet - Anspruch 10. Durch diese vorteilhafte Ausgestaltung des erfindungsgemäßen Verfahrens d.h. durch das Ableiten oder Erzeugen von digitalen Signalen werden die in anlogen Schaltungen bzw. Anordnungen auftretenden Nachteile - z.B. Temperatur- und Spannugnsdrift - vermieden und somit die Qualität der Demodulation der durch das erste Trägersignal übermittelten Nutzdaten vermieden.

Vorteilhaft wird das digitale, modulierte zweite Trägersignal digital/analog-gewandelt und in ein analoges erstes Teil-Trägersignal mit der ersten Frequenz umgewandelt. Desweiteren wird aus dem zweiten Trägersignal ein analoges zweites Teil-Trägersignal mit einer zweiten Frequenz abgeleitet. Aus dem ersten und zweiten Teil-Trägersignal wird das modulierte zweite Trägersignal mit der vorgegebenen Phasenlage oder mit der um die ermittelte Phasendifferenz korrigierten Phasenlage gebildet, wobei das modulierte zweite Trägersignal eine die Summe der Frequenzen der ersten und zweiten Teil-Trägersignale aufweisende Frequenz aufweist - Anspruch 11. Durch diese vorteilhafte Ausgestaltung können digitale Mittel zur Ableitung und Erzeugung der genannten digitaler Signale mit niedrigen Taktfrequenz - z.B. kleiner gleich 155 MHz - getaktet und somit das erfindungsgemäße Verfahren besonders wirtschaftlich realisiert werden.

Die Ansprüche 23 bis 27 beziehen sich auf eine besonders vorteilhafte Anordnungsvariante zum schnellen Synchronisieren eines ersten analogen Trägersignals mit einer vorgegebenen Phasenlage mit einem zweiten Trägersignal mit Hilfe einer Digital-Einheit. Die Digital-Einheit ist vorteilhaft mit einer geringen Anzahl einfacher digitaler Komponenten äußerst kostengünstig und mit geringem technischen Aufwand realisierbar, wobei für die Realisierung beispielsweise schnelle ASIC's oder FPGA's zur Verfügung stehen.

Weitere vorteilhafte Ausgestaltungen des erfindungsgemäßen Verfahrens und der erfindungsgemäßen Anordnung sind den weiteren Ansprüchen zu entnehmen.

Im Folgenden wird das erfindungsgemäße Verfahren anhand von vier Blockschaltbildern näher erläutert. Dabei zeigen
- FIG 1: eine beispielhafte Anordnung zur schnellen Synchronisierung zweier Trägersignale, und
- FIG 2: die Zeitverläufe von in FIG 1 dargestellten Signalen, und
- FIG 3: eine vorteilhafte Anordnung zur wirtschaftlichen, d.h. kostengünstigen digitalen Realisierung des erfindungsgemäßen Verfahrens zum schnellen digitalen Synchronisieren zweier Trägersignale, und
- FIG 4: die Zeitverläufe eines in FIG 3 dargestellten, digital erzeugten Signals.

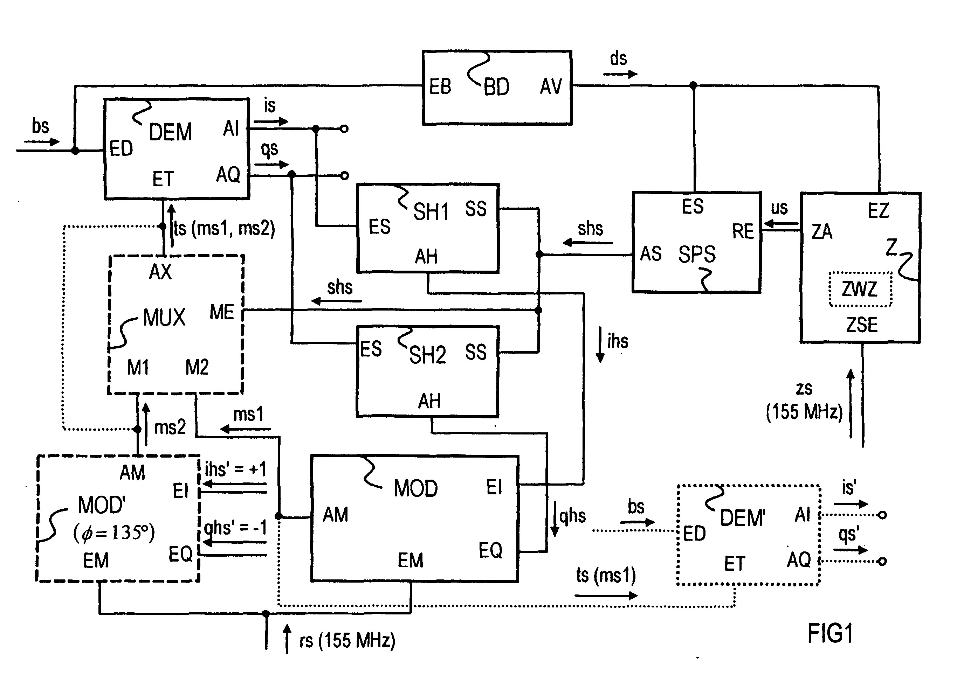

FIG 1 zeigt in einem Blockschaltbild beispielhaft eine Anordnung zur Realisierung des erfindungsgemäßen Verfahrens zum schnellen Synchronisieren zweier Trägersignale. Die Anordnung ist Teil einer schaltungstechnischen Komponente, welche im Empfangsmodul einer ein Punkt-Zu-Multipunkt-Funksystem - nicht dargestellt - realisierenden Basisstation - nicht dargestellt - angeordnet ist. Mit der in der Mitte einer Funkzelle - nicht dargestellt - angeordneten Basisstation sind über mehrere drahtlose Funkkanäle mehrere Netzabschlußeinheiten - nicht dargestellt - verbunden. Die Verbindung zwischen der Basisstation und den Netzabschlußeinheiten weist beispielsweise eine Summenbitrate von 155 MBit/s auf, wobei die Summenbitrate auf die angeschlossenen Netzabschlußeinheiten verteilt ist. In diesem Ausführungsbeispiel erhalten die einzelnen Netzabschlußeinheiten mittels eines Zeitmultiplex-Zugriffsverfahren - auch als Time Division Multiple Access - bzw. TDMA-Verfahren bezeichnet - abwechselnd Zugriff auf das gemeinsam genutzte drahtlose Übertragungsmedium "Funkkanal". Beim TDMA-Übertragungsverfahren senden die einzelnen Netzabschußeinheiten abwechselnd Signale mit bestimmter zeitlicher Länge - im folgenden auch als Signal-Bursts bezeichnet - zur Basisstation. Von der Basisstation wird der Zugriff auf das gemeinsam genutzte Übertragungsmedium "Funkkanal" gesteuert, d.h. der Zeitpunkt bestimmt, an dem eine Netzabschlußeinheit Informationen an die Basisstation senden darf.

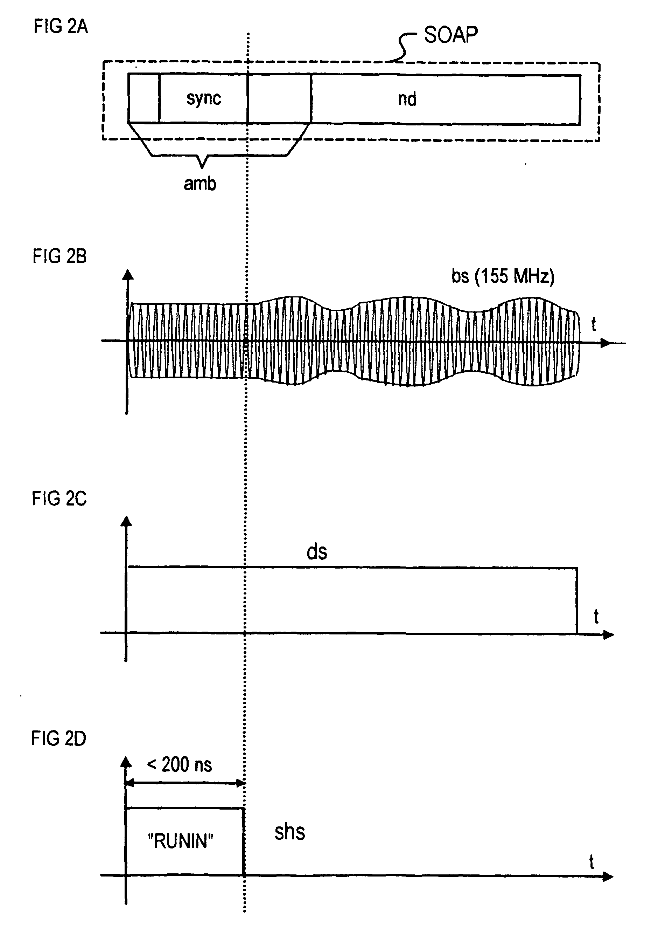

Mit Hilfe der in FIG 1 dargestellten Anordnung wird die bereits für das Übertragungsmedium "Lichwellenleiter" realisierte Übertragung von SOAP-Datenrahmen - Siemens Optical Advanced PON - auf das drahtlose Übertragungsmedium "Funkkanal" übertragen, d.h. einzelne mit der Basisstation verbundene Netzabschlußeinheiten senden in einem Signal-Burst digital vorliegende Informationen mit einem Datenumfang von 60 Byte an die Basisstation. In FIG 2A ist beispielsweise ein für die Upstream-Richtung spezifischer SOAP-Datenrahmen SOAP dargestellt. Mit Hilfe des dargestellten SOAP-Datenrahmens SOAP werden 60 Byte Daten übertragen, wobei die ersten 7 Byte des SOAP-Datenrahmens SOAP als Präambel amb vorgesehen sind. Von der 7 Byte Daten umfassenden Präambel amb stehen 40 Bit als Synchronisier-Bits sync für die empfängerseitige Bestimmung der Signalparameter - Amplitude sowie Träger- und Taktphase - zur Verfügung. Die restlichen 53 Byte des SOAP-Datenrahmens stehen für die Übertragung von Nutzdaten nd, beispielsweise einer ATM-Zelle zur Verfügung. Der in Figur 2A dargestellte SOAP-Datenrahmen SOAP ist mittels eines kohärenten Modulationsverfahrens, beispielsweise einer Offset-Vierphasenumtastung - auch als Offset-Quadratur-Phase-Shift-Keying OQPSK bezeichnet - auf ein Trägersignal mit bestimmter Trägerfrequenz, hier 155 MHz moduliert. In FIG 2B ist der zeitliche Verlauf des phasenmodulierten Trägersignals bzw. des Signal-Bursts bs dargestellt. Da die einzelnen Netzabschlußeinheiten unterschiedliche Entfernungen zur Basisstation aufweisen, weisen die einzelnen von den Netzabschlußeinheiten ausgesendeten Signal-Bursts bs sowohl eine unterschiedliche Amplitude, als auch eine unterschiedliche Träger- und Taktphase auf. Der in der Basisstation angeordneten Empfangseinheit - nicht dargestellt - steht bei Eintreffen eines SOAP-Datenrahmens SOAP während des Empfangs der Präambel eine Synchronisierzeit - bzw. "Runin" - von 258 ns - entspricht der Übertragungsdauer der in der Präambel amb enthaltenen 40 Synchronisierbits sync bei einer Übertragungsrate von 155 Mbit/s - zur Verfügung.

Gemäß FIG 1 wird ein von einer Netzabschlußeinheit ausgesandtes und an einer Empfangseinheit der Basisstation - nicht dargestellt - eintreffendes Signal bzw. ein Signal-Burst bs an einen Eingang ED eines Demodulators DEM herangeführt. Das am Eingang ED anliegende Signal bs wird durch den Demodulator DEM mit Hilfe eines an einem Eingang ET anliegenden Trägersignals ts demoduliert. Der Demodulator DEM weist zwei Ausgänge AI, AQ auf, über die zwei durch den Demodulator DEM generierte und die jeweilige Phaseninformation repräsentierende Phasen-Signale is, qs geführt sind. Gemäß FIG 1 liegt das erste Phasen-Signal is - welches auch als Inphasen-Signal bzw. I-Signal bezeichnet wird und durch das die Inphase-Komponente der Phaseninformation repräsentiert wird - am Ausgang AI und das zweite Phasensignal qs - welches auch als Quadratur-Phasen-Signal bzw. Q-Signal bezeichnet wird und durch das die Quadratur-Komponente der Phaseninformation repräsentiert wird - am Ausgang AQ des Demodulators DEM an. Der an der Basisstation eintreffende und am Eingang ED des Demodulator DEM anliegende Signal-Burst bs wird gleichzeitig an einen Eingang EV einer Vergleichereinheit BD herangeführt. Die Vergleichereinheit BD ist derart konfiguriert, daß durch diese der zeitliche Beginn und das zeitliche Ende des eintreffenden Signal-Bursts bs erfaßt wird - die Vergleichereinheit BD wird auch als Burst-Detektor bezeichnet. Abhängig vom Meßergebnis wird durch die Vergleichereinheit BD ein Burst-Erkennungssignal ds gebildet und an einen Ausgang AV der Vergleichereinheit BD hingeführt. Der Ausgang AV ist über eine Verbindungsleitung mit einem Eingang ES einer Speichereinheit SPS - beispielsweise mit dem Takt-Eingang einer instabilen Kippstufe - verbunden. Die instabile Kippstufe ist z.B. durch ein D-Flip-Flop realisiert.

Desweiteren ist der Ausgang AV der Vergleichereinheit BD über eine Verbindungsleitung mit einem Steuereingang EZ eines Zählers Z verbunden. An einem weiteren Eingang ZSE des Zählers Z ist ein mit 155 MHz getaktetes und die Zählfrequenz des Zählers Z realisierendes Signal zs herangeführt. Der Zähler Z ist auf einen bestimmten End-Zählwert ZWZ - durch ein punktiertes Rechteck dargestellt - einstellbar. Bei Anliegen eines ein Startsignal - z.B. ansteigende Signalflanke - repräsentierenden Burst-Erkennungssignals ds am Steuereingang EZ der Zählers Z wird der Zählvorgang mit einer Zählfrequenz von 155 MHz gestartet. Bei Erreichen des End-Zählwertes ZWZ wird ein Überlaufsignal us durch den Zähler Z generiert und über einen Ausgang ZA des Zählers Z an einen Reset-Eingang RE der Speichereinheit SPS übermittelt. In Abhängigkeit von den an den Eingängen ES und RE der Speichereinheit SPS anliegenden Signale ds, us wird durch die Speichereinheit SPS ein Steuersignal shs generiert und an einen Ausgang AS der Speichereinheit SPS weitergeleitet.

Der Ausgang AS der Speichereinheit SPS ist über Steuerleitungen jeweils mit einem Steuereingang SS eines ersten und zweiten Speicherverstärkers SH1, SH2 verbunden. Die beiden Speicherverstärker SH1, SH2 weisen jeweils einen Eingang ES auf, wobei der Eingang ES des ersten Speicherverstärkers SH1 mit dem Ausgang AI des Demodultators DEM und der Eingang ES des zweiten Speicherverstärkers SH2 mit dem Ausgang AQ des Demodulators DEM verbunden ist. Desweiteren weisen die Speicherverstärker SH1, SH2 jeweils einen Ausgang AH auf, wobei der Ausgang AH des ersten Speicherverstärkers SH1 mit einem ersten Phasen-Eingang EI eines Modulators MOD und der Ausgang AH des zweiten Speicherverstärkers SH2 mit einem zweiten Phasen-Eingang EQ des Modulators MOD verbunden ist. Durch die beiden Speicherverstärker SH1, SH2 wird innerhalb eines üblicherweise als Erfassungs-Phase bezeichneten Zeitintervalls - auch als Sample-Phase bezeichnet - der Amplitudenwert eines am Eingang ES anliegenden Phasen-Signals is, qs erfaßt und nach Ablauf der Erfassungs-Phase für ein üblicherweise als Halte-Phase bzw. Hold-Phase bezeichnetes Zeitintervall ein den erfaßten Amplitudenwert aufweisendes Signal ihs, qhs generiert und an den Ausgang AH geführt.

An einen Takt-Eingang EM des Modulators MOD ist über eine Verbindungsleitung ein Referenz-Trägersignal rs mit einer Frequenz von 155 MHz herangeführt. Der 155-MHz-Takt des Referenz-Taktsignals rs ist beispielsweise von einem in der Basisstation angeordneten Zell-Transport-System - nicht dargestellt - abgeleitet und weist die gleiche Frequenz wie das kontinuierlich in Richtung Netzabschlußeinheiten - Downstream-Richtung - ausgesendete Signal auf. Aus dem der Netzabschlußeinheiten-seitig empfangenen, kontinuierlich in Downstream-Richtung ausgesandten Signal wird die Trägerfrequenz der von den Netzabschlußeinheiten an die Basisstation ausgesendeten Signal-Bursts bs abgeleitet. Durch diese Kopplung der in Downstream- und Upstream-Richtung ausgesandten Signale bzw. Signal-Bursts - in Figur 1 ist nur der in Upstream-Richtung übermittelte Signal-Burst bs angedeutet - weisen das Referenz-Trägersignal rs und der empfangene Signal-Burst bs die gleiche Frequenz, jedoch - bedingt durch Übertragungslaufzeiten im Übertragungsmedium "Funkkanal" - jeweils eine unterschiedliche Phasenlage bzw. eine Phasendifferenz Δφ auf. Das am Eingang EM des Modulators MOD anliegende Referenz-Trägersignal rs wird durch den Modulator MOD und mittels der beiden eine Phaseninformation bzw. eine Phasendifferenz Δφ repräsentierenden und von Ausgängen AI, AQ des Demodulators DEM abgeleiteten Phasen-Signale is, qs bzw. ihs, qhs mit der bestimmten Phase Δφ moduliert bzw. phasenmoduliert, wobei das gebildete phasenmodulierte Signal ms1 an einen Ausgang AM des Modulators MOD geführt ist.

Nach einer ersten Ausgestaltungsvariante ist der Ausgang AM des Modulators MOD mit dem Hilfsträger-Eingang ET des Demodulators DEM verbunden, wobei das am Ausgang AM anliegende, phasenmodulierte Trägersignal ms1 als Hilfsträgersignal ts an den Eingang ET geleitet wird.

Im folgenden wird das erfindungsgemäße Verfahren zur schnellen Synchronisierung des am Eingang ED des Demodulators DEM anliegenden Signal-Bursts bs mit dem am Eingang ET des Demodulators DEM anliegenden Hilfsträgersignal ts bzw. ms1 mittels der in FIG 1 dargestellten Anordnung näher erläutert:

Gemäß FIG 2B weist der am Eingang ED des Demodulators DEM anliegende Signal-Burst bs während der 258 ns umfassenden Zeitspanne des "Runins" eine konstante bzw. vorgegebene Phasenlage Φ von beispielsweise Φ=135° auf. Die konstante Phasenlage von Φ=135° während des "Runins" ist sendeseitig, d.h. auf Seiten der Netzabschlußeinheiten fest eingestellt. Der am Eingang ED des Demodulators DEM eintreffende Signal-Burst bs wird durch die Vergleichereinheit BD erfaßt und durch diese das die zeitliche Dauer des Signal-Bursts bs repräsentierendes Burst-Erkennungssignal ds generiert und an den Ausgang AV der Vergleichereinheit BD weitergeleitet. Beispielsweise stellt eine ansteigende Flanke des Burst-Erkennungssignals ds den Signalanfang und eine abfallende Flanke des Signals ds das Signalende des Signal-Bursts bs dar - in FIG 2C angedeutet. Durch das Anliegen einer ansteigenden Flanke am Takt-Eingang ES der Speichereinheit SPS wird das am Ausgang AS der Speichereinheit SPS anliegende Steuersignal shs in den Aktiv-zustand - z.B. Aktiv-High - gesetzt. Gleichzeitig wird durch das Vorliegen der ansteigenden Flanke am Eingang EZ des Zählers Z der Zählvorgang gestartet. In diesem Ausführungsbeispiel ist der End-Zählwert ZWZ des Zählers Z derart eingestellt, daß bei einer durch das Signal zs realisierten Zählfrequenz von 155 MHz der End-Zählwert ZWZ nach ungefähr 100 bis 200 ns erreicht ist. Nach Erreichen des End-Zählwertes ZWZ wird durch den Zähler Z das einen Zähler-Überlauf repräsentierende Überlaufsignal us generiert und über den Ausgang ZA des Zählers Z an den Reset-Eingang RE der Speichereinheit SPS übermittelt.

Bei Anliegen eines - beispielsweise durch eine ansteigende Flanke - einen Überlauf signalisierenden Überlaufsignals us am Reset-Eingang RE wird durch die Speichereinheit SPS ein entsprechendes, z.B. einen Inaktiv-Zustand repräsentierendes Signal shs generiert und an des Ausgang AS geleitet. Der zeitliche Verlauf des am Ausgang AS der Speichereinheit SPS anliegenden Signals shs während des "Runins" ist in FIG 2D dargestellt. Das durch die Speichereinheit SPS generierte Signal shs ist während der Zeitperiode des "Runins" in den Aktiv-Zustand - z.B. Aktiv-High - und während des restlichen Zeitverlaufes des Signal-Bursts bs in den Inaktiv-Zustand geschaltet. Durch das Anliegen des in den Aktiv-Zustand geschalteten Signals shs an den Steuereingängen SE des ersten und zweiten Speicherverstärkers SH1, SH2 werden die beiden Speicherverstärker SH1, SH2 in den Erfassungs-Zustand bzw. in die Hold-Phase geschaltet. Bei in die Hold-Phase geschalteten Speicherverstärkern SH1, SH2 werden die die Phaseninformationen bzw. die Phasendifferenz des Signal-Bursts bs repräsentierenden und an den Ausgängen AI und AQ des Demodulators DEM anliegenden Phasen-Signale is, qs durch die Speicherverstärker SH1, SH2 erfaßt und gespeichert. Während des "Runins" weist per Voreinstellung das am Ausgang AH des ersten Speicherverstärkers SH1 anliegende Phasen-Signal ihs einen festen Amplitudenwert von +1 und das am Ausgang AH des zweiten Speicherverstärkers SH2 anliegende Phasen-Signal qhs einen festen Amplitudenwert von -1 auf.

Durch das Anliegen des Phasen-Signals ihs=+1 am Eingang EI und des Phasen-Signals qhs=-1 am Eingang EQ des Modulators MOD ist dieser während des "Runins" auf die Sollphase von Φ=135° fest eingestellt, wodurch das am Eingang EM des Modulators MOD anliegende Referenz-Taktsignal rs mit einer Phasenlage von Φ=135° phasenmoduliert und als moduliertes Referenz-Taktsignal bzw. Trägersignal ms1 über den Ausgang AM an den Träger-Eingang ET des Demodulators DEM geführt wird.

Während des "Runins" wird durch den Demodulator DEM die Phasenlage des eintreffenden Signal-Bursts bs - mit einer Sollphase von Φ=135° von einer Netzabschlußeinheit gesendet - mit der auf Φ=135° voreingestellten Phasenlage des Trägersignals ms1 bzw. ts verglichen. Bei Feststellen einer durch Übertragungslaufzeiten im "Funkkanal" bedingten Abweichung bzw. Phasendifferenz Δφ des Signal-Bursts bs von der Sollphase von Φ=135° werden durch den Demodulator DEM die entsprechenden, die Phasendifferenz Δφ repräsentierende Phasen-Signale is, qs generiert und über die Ausgänge AI und AQ an die entsprechenden Eingängen ES der beiden Speicherverstärker SH1, SH2 geführt.

Bei Erreichen des End-Zählwertes ZWZ im Zähler Z wird ein Überlaufsignal us an die Speichereinheit SPS übermittelt und das am Ausgang AS der Speichereinheit SPS anliegende Signal shs in den Inaktiv-Zustand geschaltet. Durch das Anliegen eines in den Inaktiv-Zustand geschalteten Signals shs an den Eingängen SE der beiden Speicherverstärker SH1, SH2 werden diese vom Erfassungs-Zustand in den Halte-Zustand geschaltet. Bei in den Halte-Zustand geschalteten Speicherverstärkern SH1, SH2 wird jeweils der letzte, während des Erfassungs-Zustands am Eingang ES anliegende Amplitudenwert des anliegenden Phasen-Signals is, qs gespeichert und ein Signal ihs, qhs mit dem gespeicherten Amplitudenwert generiert, welches während des Zeitraums des Halte-Zustands - also bis zum Ende der Laufzeit des Signal-Bursts bs - an den Ausgang AH des Speicherverstärkers SPS geschaltet wird. Durch die an den Ausgängen AH des ersten und zweiten Speicherverstärker SH1, SH2 anliegenden Phasen-Signale ihs und qhs wird die während des "Runins" festgestellte und durch die Phasen-Signale ihs, qhs repräsentierte Phasendifferenz Δφ an die Steuereingänge EI, EQ des Modulators MOD herangeführt, wodurch das am Eingang EM des Modulators MOD anliegende Referenz-Taktsignal rs um den Wert der durch die Phasen-Signale ihs, qhs repräsentierten Phasendifferenz Δφ korrigiert bzw. an die aktuelle während des "Runins" festgestellte Phasenlage des Signal-Bursts bs angepaßt wird.

Durch die in FIG 1 dargestellte Anordnung wird eine durch Übertragungsfehler im Übertragungsmedium "Funkkanal" verursachte Phasenverschiebung bzw. Phasendifferenz Δφ von an einer Basisstation eintreffenden Signal-Bursts bs auf sehr schnelle Weise korrigiert und somit eine fehleroptimierte Demodulation von hochbitratigen Datenströmen bzw. von jeweils unterschiedliche Signalparameter aufweisenden Signal-Bursts bs ermöglicht.

Gemäß einer vorteilhaften Ausgestaltung der in FIG 1 dargestellten Anordnung - durch strichlierte Linien in FIG 1 dargestellt - ist das Referenz-Taktsignal rs an einen Eingang EM eines weiteren Modulators MOD' - auch als Einstell-Modulator bezeichnet - herangeführt. Durch das Anlegen eines den Amplitudenwert +1 aufweisenden Phasen-Signal ihs' am Eingang EI und durch das Anlegen eines den Amplitudenwert -1 aufweisenden Phasen-Signals qhs' am Eingang EQ des Einstell-Modulators MOD' wird das am Eingang EM anliegende Referenz-Taktsignal rs mit einer fest eingestellten bzw. vorgegebenen Phasenlage von Φ=135° phasenmoduliert und an den Ausgang AM geleitet. Gemäß dieser Ausgestaltungsvariante sind die Ausgänge AM der beiden Modulatoren MOD, MOD' jeweils mit einem ersten und zweiten Eingang M1, M2 eines Multiplexers MUX verbunden. Der Multiplexer MUX weist einen mit dem Ausgang AS der Speichereinheit SPS verbunden Steuereingang ME auf, wodurch das am Ausgang AS der Speichereinheit SPS anliegende Signal shs an den Steuereingang ME herangeführt ist. Desweiteren weist der Multiplexer MUX einen mit dem Träger-Eingang ET des Demodulators DEM verbundenen Ausgang AX auf. Der Multiplexer MUX ist derart konfiguriert, daß während der Phasendifferenz-Erkennungszeit bzw. während des "Runins" - d.h. z.B. bei einem den Aktiv-Zustand repräsentierenden Signal shs am Steuer-Eingang ME - das am Ausgang AM des Einstell-Modulators MOD' anliegende Trägersignal ms2 an den Ausgang AX des Multiplexers MUX geschaltet und somit als Trägersignal ts an den Eingang ET des Demodulators DEM herangeführt ist. Nach Ablauf der Phasendifferenz-Erkennungszeit bzw. nach Beendigung des "Runins" - d.h. z.B. bei einem den Inaktiv-Zustand repräsentierenden Signal shs am Steuer-Eingang ME - wird das am Ausgang AM des Modulators MOD anliegende Trägersignal ms1 an den Ausgang AX des Multiplexers MUX geschaltet und als Trägersignal ts an den Eingang ET des Demodulators DEM geführt. Durch diese Ausgestaltungsvariante ist eine Umschaltung der Eingängen EI, EQ des Modulators MOD auf unterschiedliche Spannungswerte nach dem "Runin" - d.h. eine Änderung der Spannungswerte der anliegenden Signale ihs, qhs - nicht mehr erforderlich, wobei durch die Anordnung des Einstell-Modulators MOD' und des Multiplexers MUX die Schaltzeiten der in FIG 1 dargestellten Anordnung vorteilhaft weiter minimiert werden.

Gemäß einer weiteren Ausgestaltungsvariante ist der Ausgang AM des Einstell-Modulators MOD' mit dem Eingang ET des Demodulators DEM und der Ausgang AM des Modulators MOD mit einem Eingang ET eines weiteren Demodulators DEM' - durch punktierte Linien angedeutet - verbunden. An einen weiteren Eingang ED des weiteren Demodulators DEM' ist das erste analoge Trägersignal bs herangeführt. Wie bereits erläutert wird durch das Anlegen eines den Amplitudenwert +1 aufweisenden Phasen-Signals ihs' am Eingang EI und durch das Anlegen eines den Amplitudenwert -1 aufweisenden Phasen-Signals qhs' am Eingang EQ des Einstell-Modulators MOD' das am Eingang EM anliegende Referenz-Trägersignal rs mit einer fest eingestellten bzw. vorgegebenen Phasenlage von Φ=135° phasenmoduliert und über den Ausgang AM an den Eingang ET des Demodulators DEM geführt. Nach Ablauf der Phasendifferenz-Erkennungszeit bzw. nach Beendigung des "Runins" wird das am Ausgang AM des Modulators MOD anliegende und um die ermittelte Phasendifferenz korrigierte, modulierte Referenz-Trägersignal ts (ms1) an den Eingang ET des weiteren Demodulators DEM' geleitet. Die an den Ausgängen des weiteren Demodulators DEM' anliegenden Phasen-Signale is', qs' repräsentieren das demodulierte Nutzsignal nach der Phasendifferenz-Erkennungszeit. Durch die Anordnung eines weiteren Demodulators DEM' kann auf die zusätzlichen Schaltmittel bzw. den Multiplexer MUX der vorgehend beschriebenen Ausgestaltungsvariante verzichtet werden, wodurch zusätzliche Schaltvorgänge vermieden und somit die Schaltzeiten der beschriebenen Anordnung weiter minimiert und die Qualität der Demodulation der durch das Signal bs übermittelten Nutzdaten nd weiter verbessert.

Vorteilhaft ist die in FIG 1 dargestellte analoge Anordnung zum Synchronisieren zweier Trägersignale bs, rs mit digitalen Schaltelementen, d.h. mit Hilfe von digitalen Multiplizierern, Addierern und bistabilen Kippstufen realisierbar - nicht dargestellt. Durch den Einsatz digitaler Schaltelemente werden die in analogen Schaltungen auftretenden Nachteile - z.B. Temperatur- und Spannungsdrift - vermieden und somit die Qualität der Demodulation der durch das erste Trägersignal bs übermittelten Nutzdaten nd verbessert. Vorteilhaft sind die digitalen Schaltelemente durch einen hochwertigen, d.h. schnellen, bipolaren ASIC realisierbar. Das für die Synchronisierung erforderliche Referenz-Trägersignal kann beispielsweise durch Auslesen von in einem Speicher gespeicherten Signalwerten - auch als "Look-Up-Table" bezeichnet - generiert werden. Um eine Modulation dieses digital erzeugten Referenz-Trägersignals rs zu ermöglichen, müssen die gespeicherten Signalwerte mit mindestens der vierfachen Taktrate als die Frequenz des erzeugten Signals rs - d.h. mindestens vier Abtastwerte pro Signalperiode - aus der "Look-Up-Table" ausgelesen - in diesem Ausführungsbeispiel mit Ausleserate von 4*155 MHz = 622 MHz - und somit der ASIC mit einer Steuertaktrate von mindestens 622 MHz getaktet werden. Dies ist jedoch nur mit einem sehr hohen wirtschaftlichen Aufwand realisierbar.

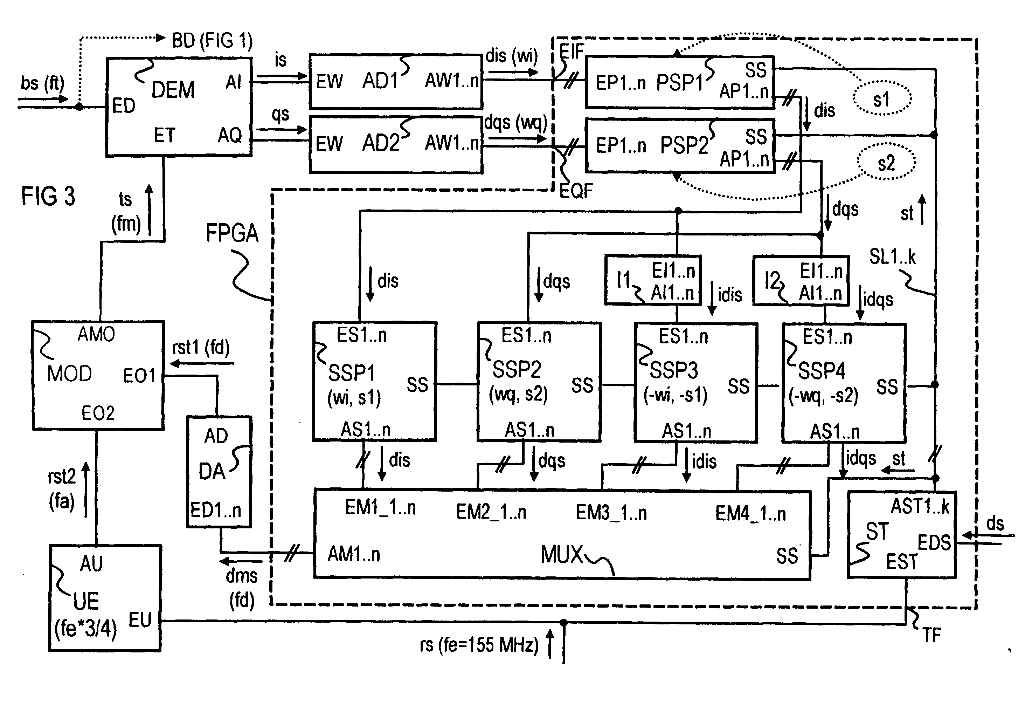

FIG 3 zeigt eine vorteilhafte wirtschaftliche, d.h. kostengünstige Realisierung des erfindungsgemäßen Verfahrens zum schnellen digitalen Synchronisieren zweier Trägersignale, wobei ein Teil der in FIG 1 dargestellten analogen Schaltelemente durch digitale Schaltelemente mittels eines FPGA - Field Programmable Gate Array, in FIG 3 durch ein strichliertes Rechteck dargestellt - realisiert ist. Bei dieser Ausgestaltungsvariante wird der FPGA mit einem Referenz-Taktsignal bzw. Referenz-Trägersignal rs mit einer Taktfrequenz von kleiner gleich 155 MHz getaktet. Gemäß FIG 3 wird ein an einer Basisstation - nicht dargestellt - eintreffendes Signal bzw. ein Signal-Burst bs an einen Eingang eines analogen Demodulators DEM herangeführt. Das am Eingang ED anliegende Signal bs wird durch den Demodulator DEM mit Hilfe eines an einem Eingang ET anliegenden Hilfs-Trägersignals bzw. mit Hilfe eines modulierten Referenz-Trägersignals ts demoduliert. Der an der Basisstation eintreffende und am Eingang ED des Demodulators DEM anliegende Signal-Burst bs wird gleichzeitig an eine in FIG 1 dargestellte und dort entsprechend beschriebene Vergleichereinheit BD hingeführt - in FIG 3 durch einen strichlierten Pfeil angedeutet. Hinsichtlich der Erfassung des zeitlichen Beginns und des zeitlichen Endes des eintreffenden Signal-Bursts bs wird auf FIG 1 und die entsprechende Beschreibung verwiesen. Der Demodulator DEM weist zwei Ausgänge AI, AQ auf, an die zwei durch den Demodulator DEM generierte und die jeweilige Phaseninformation des am Eingang ET anliegenden Signals bs repräsentierende Phasen-Signale is, qs geführt sind.

Die an den Ausgängen AI, AQ des Demodulators DEM anliegenden Phasen-Signale is, qs sind jeweils an einen Eingang EW eines Analog/Digital-Wandlers AD1,2 geführt, durch welche die analogen Phasen-Signale is, qs in digitale Phasen-Signale dis, dqs mit beispielsweise einer Wortbreite von 8 Bit umgewandelt werden. Das digitale Phasen-Signal dis repräsentiert dabei einen ersten Phasen-Wert wi und das digitale Phasen-Signal dqs einen zweiten Phasen-Wert wq, wobei die beiden Phasen-Werte wi, wq bei einer Wortbreite von 8 Bit eine Wertebereich von "0" bis "256" umfassen. Die beiden Analog/Digital-Wandler AD1,2 weisen jeweils mehrere Ausgänge AW1...n auf, welche über parallele Datenleitungen mit entsprechenden Eingängen EP1...n eines ersten und zweiten Phasen-Speichers PSP1,2 verbunden sind. Die beiden Phasen-Speicher PSP1,2 sind beispielsweise durch bistabile Kippstufen-Register realisiert. In jedem Phasen-Speicher PSP1,2 ist jeweils ein mit Hilfe der digitalen Phasen-Signale dis,dqs übermittelter Phasen-Wert wi,wq speicherbar. Jeder der beiden Phasen-Speicher PSP1, 2 weist mehrere Ausgänge AP1...n auf. Die Ausgänge AP1...n des ersten Phasen-Speichers PSP1 sind über Datenleitungen mit Eingängen ES1...n eines ersten Signal-Speichers SSP1 und mit Eingängen EI1...n eines ersten Invertierers I1 verbunden, wobei am ersten Invertierer angeordnete Ausgänge AI1...n über Datenleitungen an Eingänge ES1...n eines dritten Signal-Speichers SSP3 angeschlossen sind. Die Ausgänge AP1...n des zweiten Phasen-Speichers PSP2 sind über Datenleitungen mit Eingängen ES1...n eines zweiten Signal-Speichers SSP2 und mit Eingängen EI1...n eines zweiten Invertierers I2 verbunden, wobei am zweiten Invertierer I2 angeordnete Ausgänge AI1...n über Datenleitungen an Eingänge ES1...n eines vierten Signal-Speichers SSP4 angeschlossen sind. Die vier Signal-Speicher SSP1...4 weisen jeweils mehrere Ausgänge AS1...n auf, welche über Datenleitungen mit entsprechend ausgestalteten Eingängen EM1_1...n, EM2_1...n, EM3_1...n, EM4_1...n eines Multiplexers MUX verbunden sind. In jedem der vier Signal-Speicher SSP1...4 ist jeweils ein durch ein an den Eingängen ES1...n anliegendes digitales Phasen-Signal dis, dqs bzw. durch ein invertiertes digitales Phasen-Signal idis, idqs repräsentierter digitaler Phasen-Wert W1,2 bzw. invertierter, digitaler Phasen-Wert -W1, -W2 speicherbar. Durch den Multiplexer MUX - vorteilhaft als Bus-Multiplexer ausgestaltet - wird zu jedem Zeitpunkt nur eines der an den Ausgängen AS1...n der vier Signal-Speicher SSP1...4 bzw. eines an den Eingängen EM1_1...n, EM2_1...n, EM3_1...n, EM4_1...n des Multiplexers MUX anliegenden digitalen Phasen-Signale bzw. invertierten digitalen Phasen-Signale idis, idqs an im Multiplexer MUX angeordnete Ausgänge AM1...n durchgeschaltet.

Die Ausgänge AM1...n des Multiplexers MUX sind über Datenleitungen an Eingänge ED1...n eines Digital/Analog-Wandlers DA angeschlossen. Der Digital/Analog-Wandler weist einen Ausgang AD auf welcher mit einem ersten Eingang EO1 eines analogen Modulators MOD verbunden ist. Der Modulator MOD ist über einen Ausgang AMO und über eine Verbindungsleitung mit dem Hilfsträger-Eingang ET des Demodulators DEM verbunden. Über einen zweiten Eingang EO2 ist der Modulator MOD an einen Ausgang AU einer Umwandlungseinheit UE angeschlossen, wobei ein in der Umwandlungseinheit UE angeordneter Eingang EU mit dem an den FPGA herangeführten Referenz-Trägersignal rs verbunden ist. In diesem Ausführungsbeispiel ist durch die Umwandlungseinheit UE ein Frequenzwandler realisiert, welcher die Frequenz des am Eingang EU anliegenden Referenz-Trägersignals rs - mit einer Eingangs-Frequenz von fe=155 MHz - in eine Ausgangs-Frequenz fa=fe*3/4 umwandelt. Das Referenz-Trägersignal rs ist weiterhin - über einen Takteingang TF des FPGA - an einen Takteingang EST einer im FPGA angeordneten Takt-Steuereinheit bzw. einer Steuereinheit ST geführt. Die Steuereinheit ST ist über Steuerausgänge AST1...k, mehrere Steuerleitungen SL1...k und über Steuereingänge SS jeweils mit dem Multiplexer MUX, den vier Signal-Speichern SSP1...4 und den beiden Phasen-Speichern PSP1,2 verbunden. Durch von der Steuereinheit ST erzeugte Takt-Steuersignale st werden unter anderem die Speichervorgänge der Phasen- und Signal-Speicher PSP1,2, SSP1...4 sowie die Schaltvorgänge des Multiplexers MUX gesteuert.

Im folgenden wird das erfindungsgemäße Verfahren zur schnellen digitalen Synchronisierung des am Eingang ED des Demodulators DEM anliegenden Signal-Bursts bs mit dem am Eingang ET des Demodulators DEM anliegenden Hilfs-Trägersignals bzw. mit dem modulierten Referenz-Trägersignal ts mittels der in FIG 3 dargestellten Anordnung näher erläutert:

Wie bereits zu FIG 1 beschrieben, weist der am Eingang ED des Demodulators DEM anliegende Signal-Burst während der 258 ns umfassenden Zeitspanne des "Runins" eine konstante bzw. eine auf Seiten der Netzabschlußeinheiten fest eingestellte Phasenlage von φ=135° auf. Wie bereits bzgl. FIG 1 beschrieben, wird vom am Eingang ED des Demodulators DEM eintreffenden Signal-Burst bs ein die zeitliche Dauer des Signal-Burst bs repräsentierendes Burst-Erkennungssignal ds - mittels einer in FIG 3 nicht dargestellten, jedoch durch einen strichlierten Pfeil angedeuteten Vergleichereinheit BD - abgeleitet und an einen Steuereingang EDS der Steuereinheit ST geführt. Desweiteren ist der in FIG 1 dargestellte und beschriebene Zähler Z funktionell in der Steuereinheit ST integriert.

Wie bereits erläutert, weist das am Eingang ET des Demodulators DEM anliegende phasenmodulierte Referenz-Trägersignal ts während der Zeitperiode des "Runins" eine Sollphase von φ=135° auf. Dazu sind während des "Runins" in den beiden Phasen-Speichern PSP1,2 per Voreinstellung vorgegebene, die Sollphase von φ=135° repräsentierende, Startwerte s1,2 als Phasen-Werte wi, wq gespeichert, beispielsweise im ersten Phasen-Speicher PSP1 der Startwert s1=240 und im zweiten Phasen-Speicher PSP2 der Startwert S2=20 - in FIG 3 durch strichlierte, ellipsenförmige Kreise angedeutet. In diesem Ausführungsbeispiel repräsentiert der Wert "256" die maximale positive Amplitude und der Wert "0" die maximale negative Amplitude eines aus diskreten Werten zu generierenden digitalen Signals dms, wobei der Wert "128" die Null-Linie des digitalen Signals dms repräsentiert. Durch entsprechende Konfiguration der Steuerung ST - d.h. durch entsprechende Ansteuerung der Phasen- und Signal-Speicher PSP1, 2 und SSP1...4 - ist zu Beginn des "Runins" der im ersten Phasen-Speicher PSP1 gespeicherte Startwert s1 als Phasen-Wert wi im ersten Signal-Speicher SSP1 und als invertierter Phasen-Wert -wi im dritten Signal-Speicher SSP3 gespeichert. Entsprechend ist der im zweiten Phasen-Speicher PSP2 gespeicherte Startwert s2 als Phasen-Wert wq im zweiten Signal-Speicher SSP2 und als invertierter Phasen-Wert -wq im vierten Signal-Speicher SSP4 gespeichert. Die in den vier Signal-Speichern SSP1...4 gespeicherten Phasen-Werte wi, wq, -wi, -wq bzw. die diese Phasen-Werte wi, wq, -wi, -wq repräsentierenden und an den Eingängen EM1_1...n, EM2_1...n, EM3_1...n, EM4_1...n des Multiplexers MUX anliegenden digitalen Phasen-Signale dis, dqs, bzw. invertierten digitalen Phasen-Signale idis, idqs werden gemäß dem dem Multiplexer MUX zugeführten Steuersignal st sequentiell mit einer Abtastrate von 155 Werten pro Sekunde auf die Ausgänge AM1...n des Multiplexers MUX geschaltet. Das aus den diskreten Phasen-Werten wi, wq, -wi, -wq gebildete und an den Ausgängen AM1...n des Multiplexers MUX anliegende digitale Signal dms weist 4 Abtastwerte wi, wq, -wi, -wq pro Schwingungsperiode und somit eine Frequenz fd von fd = fe/4 = 155/4 MHz auf.

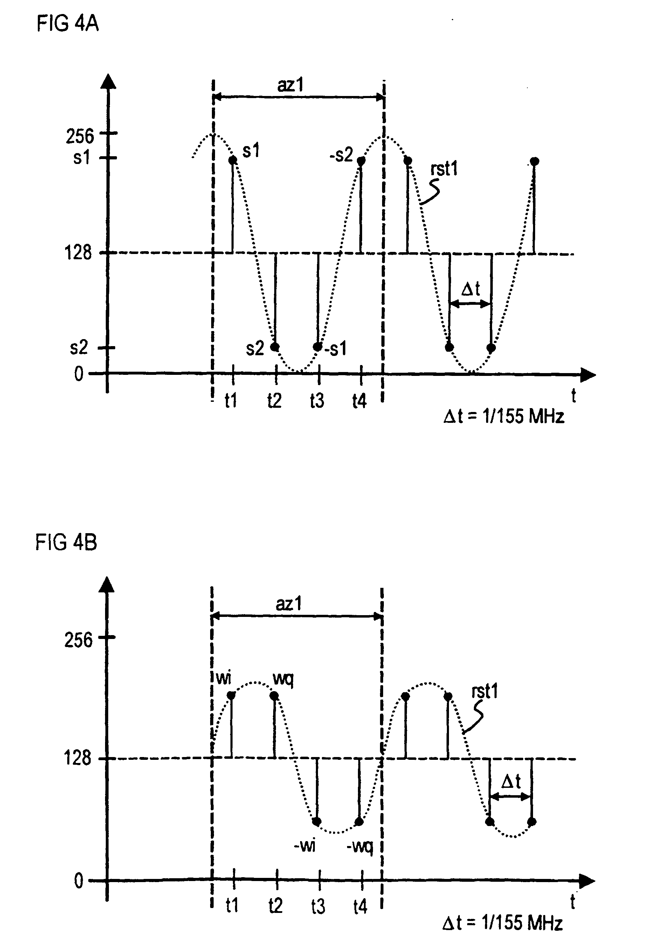

In FIG 4A ist beispielhaft das an den Ausgängen AM1...n des Multiplexers MUX anliegende und während des "Runins" aus den vier in den vier Signal-Speichern SSP1...4 gespeicherten Startwerten s1, -s1, s2, -s2 gebildete digitale Signal dms dargestellt, wobei die während eines ersten Auslesezyklusses az1 an den Ausgängen AM1...n des Multiplexers MUX anliegenden Startwerte s1,2 bzw. invertierten Startwerte -s1,-s2 den entsprechenden Abtastzeitpunkten t1...4 zugeordnet sind. Das digitale Signal dms wird anschließend durch den Digital/Analog-Wandler DA digital/analog-gewandelt und als erstes Teil-Referenz-Trägersignal rst1 mit einer Frequenz fd über den Eingang EO1 dem Modulator MOD zugeführt.

Durch die Umwandlungseinheit UE wird das am Eingang EU anliegende und eine Frequenz fe von fe = 155 MHz aufweisende, analoge Referenz-Trägersignal rs in ein analoges Signal rst2 mit einer Ausgangs-Frequenz fa von fa = fe*3/4 umgewandelt und über den Ausgang AU als zweites Teil-Referenz-Trägersignal rst2 an den Eingang EO2 des Modulators MOD geführt. Gemäß bekannter Modulator-Verfahren weist das aus der Modulation des ersten und zweiten Referenz-Trägersignals rst1,2 resultierende und am Ausgang AM des Modulators MOD anliegende, modulierte Referenz-Trägersignal ts eine Ausgangs-Frequenz fm auf, welche aus der Summe der Frequenzen fa, fd der an den Eingängen EO1,2 des Modulators MOD anliegenden Teil-Referenz-Trägersignale rst1,2 gebildet wird - fm = fa+fd = 1/3*fe + 3/4*fe = fe. Desweiteren weist das modulierte Referenz-Trägersignal ts die gleiche Soll-Phasenlage von φ=135° wie das durch den Multiplexer MUX gebildete, digitale Signal dms bzw. wie das aus dem digitalen Signal dms abgeleitete analoge erste Teil-Referenz-Trägersignal rst1 auf.

Wie bereits in FIG 1 erläutert, wird während des "Runins" bzw. während der Phasendifferenz-Erkennungszeit durch den Demodulator DEM die Phasenlage des eintreffenden Signal-Bursts bs - mit einer Sollphase von φ=135° von einer Netzabschlußeinheit gesendet - mit der in beschriebener Art und Weise auf φ=135° voreingestellten.Phasenlage des modulierten Referenz-Trägersignals ts verglichen. Bei Feststellen einer durch Übertragungslaufzeiten im "Funkkanal" bedingten Abweichung bzw. Phasendifferenz Δφ des Signal-Bursts bs von der Sollphase von φ=135° werden durch den Demodulator DEM entsprechende, die Phasendifferenz Δφ repräsentierende Phasen-Signale is, qs generiert und über die Ausgänge AI und AQ an die Eingänge EW der beiden Analog/Digital-Wandler AD1, 2 geführt. Gegen Ende des "Runins" werden durch Aussenden entsprechender Takt-Steuersignale st durch die Steuereinheit ST die an den Ausgängen AW1...n der Analog/Digital-Wandler AD anliegenden und die Phasendifferenz Δφ repräsentierenden digitalen Phasen-Werte w1,2 anstelle der Startwerte s1,2 in den beiden Phasen-Speichern SPS1,2 gespeichert. Anschließend werden die an den Ausgängen AP1...n der beiden Phasen-Speicher PSP1,2 anliegenden Phasen-Werte w1,2 im ersten und zweiten Signal-Speicher SSP1,2 bzw. die durch die invertierten digitalen Phasen-Signale idis, idqs repräsentierten invertierten Phasen-Werte -w1, -w2 im dritten und vierten Signal-Speicher SSP3,4 gespeichert.

Nach Ablauf des "Runins" wird aus den in den Signal-Speichern SSP1...4 gespeicherten Phasen-Werten w1,2 bzw. aus den invertierten Phasen-Werten -w1,-w2 in beschriebener Art und Weise durch den Multiplexer MUX das digitale Signal dms mit einer Frequenz von fd gebildet, wobei das digitale Signal dms erfindungsgemäß die durch die digitalen Phasen-Signale dis, diq repräsentierte Phasen-Differenz Δφ aufweist. Beispielhaft ist in FIG 4B ein nach Ablauf des "Runins" an den Ausgängen AM1...n des Multiplexer MUX anliegendes und die Phasendifferenz Δφ aufweisendes digitales Signal dms dargestellt, wobei die während des ersten Auslesezyklusses az1 die an den Ausgängen AM1...n anliegenden Phasen-Werte w1, 2 bzw. invertierten Phasen-Werte -w1, -w2 den entsprechenden Abtastzeitpunkten t1...4 zugeordnet sind. Nach erfolgter digital/analog-Wandlung durch den Digital/Analog-Wandler DA wird das digitale Signal dms als analoges erstes Teil-Referenz-Trägersignal rst1 über den ersten Eingang EO1 dem Modulator MOD zugeführt. Das durch die Modulation des zugeführten ersten Teil-Referenz-Trägersignals rst1 mit dem zugeführten zweiten Teil-Referenz-Trägersignal rst2 gebildete modulierte Referenz-Trägersignal ts weist somit eine um den Wert der ermittelten Phasendifferenz Δφ korrigierte Phasenlage φ auf, wodurch das modulierte Referenz-Trägersignal ts an die aktuelle, während des "Runins" ermittelte Phasenlage φ des Signal-Bursts bs angepaßt ist.

Die in FIG 3 dargestellte Anordnung ist vorteilhaft mit einer geringen Anzahl einfacher digitaler Komponenten - beispielsweise mit Hilfe von bistabilen Kippstufen bzw. D-Flip-Flops, Invertern und Multiplexern - äußerst kostengünstig und mit geringem technischen Aufwand realisierbar. Für die Realisierung stehen beispielsweise schnelle ASIC's oder FPGA's zur Verfügung. Die bei fortschreitender technologischer Entwicklung mögliche Erhöhung der Taktrate von ASIC's oder FPGA's läßt zusätzlich eine vorteilhafte digitale Realisierung der in FIG 3 dargestellten analogen Schaltungskomponenten - z.B. digitale Realisierung von Modulator MOD, Demodulator DEM und Frequenzwandler UE - unter Einsatz komplexer, digitaler Schaltungskomponenten - z.B. digitale Addierer und Multiplizierer - zu. Dadurch werden die Nachteile analoger Schaltungskomponenten - z.B.- Temperatur- und Spannungsdrift - vermieden und somit die Qualität der Demodulation der durch das Signal bs übermittelten Nutzdaten nd weiter verbessert.

## Patentansprüche

1. Verfahren zum schnellen Synchronisieren eines sendeseitig erzeugten ersten analogen Trägersignals (bs) mit einem in einem Empfänger erzeugten zweiten Trägersignal (rs),
**dadurch gekennzeichnet,**
- **daß** sendeseitig eine Präambel des ersten Trägersignals (bs) zumindest teilweise mit einer vorgegebenen Phasenlage moduliert wird,
- **daß** empfangsseitig das zweite Trägersignal (rs) mit der gleichen vorgegebenen Phasenlage moduliert wird,
- **daß** die Phasendifferenz des modulierten ersten Trägersignals (bs) und des modulierten zweiten Trägersignals (ts) ermittelt wird, und
- **daß** nach einer Phasendifferenz-Erkennungszeit die Phasenlage des zweiten Trägersignals (rs) um die ermittelte Phasendifferenz korrigiert wird.

2. Verfahren nach Anspruch 1,
**dadurch gekennzeichnet,**
- **daß** bei einem analog vorliegenden zweiten Trägersignal (rs) dieses analog mit der vorgegebenen Phasenlage moduliert wird, und
- **daß** die Phasendifferenz der beiden modulierten Trägersignale (bs, ts) analog ermittelt wird, und
- **daß** nach der Phasendifferenz-Erkennungszeit die Phasenlage des zweiten Trägersignals (rs) um die ermittelte Phasendifferenz analog korrigiert wird.

3. Verfahren nach Anspruch 1,
**dadurch gekennzeichnet,**
- **daß** bei einem digital vorliegenden zweiten Trägersignal (rs) dieses digital mit der vorgegebenen Phasenlage moduliert und anschließend digital/analog-gewandelt wird, und
- **daß** die Phasendifferenz der beiden modulierten Trägersignale (bs, ts) analog ermittelt wird, und
- **daß** nach der Phasendifferenz-Erkennungszeit die Phasenlage des zweiten Trägersignals (rs) um die ermittelte Phasendifferenz digital korrigiert wird.

4. Verfahren nach Anspruch 1,
**dadurch gekennzeichnet,**
- **daß** bei einem digital vorliegenden zweiten Trägersignal (rs) das erste analoge Trägersignal (bs) analog/digital-gewandelt wird, und
- **daß** die Phasendifferenz der beiden modulierten und digitalisierten Trägersignale (bs, rs) digital ermittelt wird, und
- **daß** nach der Phasendifferenz-Erkennungszeit die Phasenlage des zweiten Trägersignals (rs) um die ermittelte Phasendifferenz digital korrigiert wird.

5. Verfahren nach einen der vorherigen Ansprüche,
**dadurch gekennzeichnet,**
- **daß** während der Phasendifferenz-Erkennungszeit die Phasendifferenz repräsentierende Phasen-Signale (is, qs) gebildet werden, und
- **daß** am Ende der Phasendifferenz-Erkennungszeit die Werte der Phasen-Signale (is, qs) gespeichert werden, und
- **daß** nach der Phasendifferenz-Erkennungszeit die Phasenlage des zweiten Trägersignals (rs) um die durch die gespeicherten Phasen-Signale (is, qs) repräsentierte Phasendifferenz korrigiert wird.

6. Verfahren nach Anspruch 5,
**dadurch gekennzeichnet,**
**daß** bei einer analog ermittelten Phasendifferenz diese durch analoge Phasen-Signale (is, qs) repräsentiert ist.

7. Verfahren nach Anspruch 6,
**dadurch gekennzeichnet,**
**daß** bei einer digitalen Korrektur der Phasenlage des digital vorliegenden zweiten Trägersignals (rs) die analogen Phasen-Signale (is, qs) durch Umwandlungsmittel analog/digital-gewandelt werden.

8. Verfahren nach Anspruch 5,
**dadurch gekennzeichnet,**
**daß** bei einer digital ermittelten Phasendifferenz diese durch digitale Phasen-Signale (is, qs) repräsentiert ist.

9. Verfahren nach Anspruch 1,
**dadurch gekennzeichnet,**
**daß** aus dem zweiten Trägersignal (rs) ein digitales, moduliertes zweites Trägersignal abgeleitet wird, wobei
- während der Phasendifferenz-Erkennungszeit das digitale, modulierte zweite Trägersignal mit der vorgegebenen Phasenlage, und
- nach der Phasendifferenz-Erkennungszeit das digitale, modulierte zweite Trägersignal mit der um die ermittelte Phasendifferenz korrigierten Phasenlage gebildet wird.

10. Verfahren nach Anspruch 9,
**dadurch gekennzeichnet,**
- **daß** während der Phasendifferenz-Erkennungszeit das digitale, modulierte zweite Trägersignal mit Hilfe von die vorgegebene Phasenlage repräsentierenden Phasen-Werten (s1,2) gebildet wird, und
- **daß** während der Phasendifferenz-Erkennungszeit die Phasendifferenz repräsentierende digitale Phasen-Signale (dis, dqs) gebildet werden, und
- **daß** am Ende der Phasendifferenz-Erkennungszeit die durch die digitalen Phasen-Signale (dis, dqs) repräsentierten Phasen-Werte (wi, wq) gespeichert werden, und
- **daß** aus den gespeicherten Phasen-Werten (wi, wq) zusätzliche Phasen-Werte (-wi,-wq) abgeleitet und gespeichert werden, und
- **daß** nach der Phasendifferenz-Erkennungszeit das digitale, modulierte zweite Trägersignal mit Hilfe der gespeicherten Phasen-Werte (wi, wq) und der gespeicherten zusätzlichen Phasen-Werte (-wi, -wq) gebildet wird.

11. Verfahren nach Anspruch 9 oder 10,
**dadurch gekennzeichnet,**
- **daß** das digitale, modulierte zweite Trägersignal digital/analog-gewandelt und in ein analoges erstes Teil-Trägersignal (rst1) mit der ersten Frequenz (fd) umgewandelt wird,
- **daß** aus dem zweiten Trägersignal (rs) ein analoges zweites Teil-Trägersignal (rst2) mit einer zweiten Frequenz (fa) abgeleitet wird und
- **daß** aus dem ersten und zweiten Teil-Trägersignal (rst1,2) das modulierte zweite Referenz-Trägersignal (ts) mit der vorgegebenen Phasenlage oder mit der um die ermittelte Phasendifferenz korrigierte Phasenlage gebildet wird, wobei das modulierte zweite Trägersignal (ts) eine die Summe der Frequenzen (fd,fa) der ersten und zweiten Teil-Trägersignale (rst1,2) aufweisende Frequenz (fm) aufweist.

12. Verfahren nach Anspruch 11,
**dadurch gekennzeichnet,**
**daß** das modulierte zweite Trägersignal (ts) durch Modulation (MOD) des ersten mit dem zweiten Teil-Trägersignal (rst1,2) gebildet wird.

13. Verfahren nach einen der Ansprüche 9 bis 12,
**dadurch gekennzeichnet,**
**daß** die zusätzlichen Phasen-Werte (-wi-,-wq) durch Invertieren der Phasen-Werte (wi, wq) gebildet werden.

14. Anordnung zur schnellen Synchronisierung eines in einer Sendeanordnung erzeugten ersten analogen Trägersignals (bs) mit einem in einer Empfangsanordnung erzeugten zweiten Trägersignals (rs),
**gekennzeichnet durch**,
- in der Sendeanordnung angeordnete Modulationsmittel zur zumindest teilweisen Modulierung einer Präambel des ersten Trägersingnals mit einer vorgegebenen Phasenlage, und
- in der Empfangsanordung angeordnete
-- Modulationsmittel zur Modulierung des zweiten Trägersignals (rs) mit der gleichen vorgegebenen Phasenlage,
-- Phasendifferenz-Erkennungsmittel zum Ermitteln der Phasendifferenz des modulierten ersten Trägersignals (bs) und des modulierten zweiten Trägersignals (ts), und
-- Korrekturmittel zur Korrektur der Phasenlage des zweiten Trägersignals (rs) um die ermittelte Phasendifferenz.

15. Anordnung nach Anspruch 14,
**dadurch gekennzeichnet,**
- **daß** die Modulationsmittel als digitaler oder analoger Modulator (MOD) zum analogen oder digitalen Modulieren des zweiten Trägersignals (rs) mit der gleichen vorgegebenen Phasenlage ausgestaltet sind, und
- **daß** ein mit dem Modulator (MOD) verbundener, die Phasendifferenz-Erkennungsmittel repräsentierender, analoger oder digitaler Demodulator (DEM) vorgesehen ist, wobei an zwei Eingänge (ED, ET) des Demodulators (DEM) die beiden modulierten Trägersignale (ts, bs) herangeführt sind,
- **daß** der Demodulator (DEM)
-- Mittel zum analogen oder digitalen Ermitteln der Phasendifferenz der beiden modulierten Trägersignale (bs, ts), und
-- Mittel zum Generieren von die ermittelte Phasendifferenz repräsentierenden analogen oder digitalen Phasen-Signalen (is, qs) aufweist, wobei die generierten Phasen-Signale (is, qs) an Eingänge (EI, EQ) des Modulator (MOD) geführt sind,
- daß der Modulator (MOD) die Korrektur-Mittel zur Korrektur der Phasenlage des zweiten Trägersignals (rs) um die ermittelte und durch die anliegenden Phasen-Signale (is, qs) repräsentierte Phasendifferenz nach einer Phasendifferenz-Erkennungszeit umfaßt, und
- daß dem Modulator (MOD) weitere Mittel (BD, SPS, Z) zum Erzeugen eines aus dem ersten analogen Trägersignal (bs) abgeleiteten und den Beginn und das Ende der Phasendifferenz-Erkennungzeit repräsentierenden Steuersignals (shs) zugeordnet sind.

16. Anordnung nach Anspruch 14,
**dadurch gekennzeichnet,**
- **daß** ein die Modulationsmittel repräsentierender, digitaler oder analoger Einstell-Modulator (MOD') zum analogen oder digitalen Modulieren des zweiten Trägersignals (rs) mit der gleichen vorgegebenen Phasenlage vorgesehen ist, und
- **daß** ein analoger oder digitaler Demodulator (DEM) angeordnet ist, wobei an zwei Eingänge (ED, ET) des Demodulators (DEM) die beiden modulierten Trägersignale (bs, ts) herangeführt sind,
- **daß** der Demodulator (DEM)
-- die Phasendifferenz-Erkennungsmittel zum analogen oder digitalen Ermitteln der Phasendifferenz der beiden modulierten Trägersignale (bs, ts), und
-- Mittel zum Generieren von die ermittelte Phasendifferenz repräsentierenden analogen oder digitalen Phasen-Signalen (is, qs) umfaßt, wobei die generierten Phasen-Signale (is, qs) an Ausgänge (AI, AQ) des Demodulators (DEM) geführt sind,
- daß ein über Eingänge (EI, EQ) mit den Ausgängen (AI, AQ) des Demodulators (DEM) verbundener, digitaler oder analoger Modulator (MOD) vorgesehen ist, durch welchen die Korrektur-Mittel zur Korrektur der Phasenlage des an einen Eingang EM herangeführten zweiten Trägersignals (rs) um die ermittelte, durch die anliegenden Phasen-Signale (is, qs) repräsentierte Phasendifferenz nach einer Phasendifferenz-Erkennungszeit realisiert sind,
- daß Schaltmittel (MUX) zum zeitgerechten Schalten von durch die Modulatoren (MOD, MOD') erzeugten, modulierten zweiten Trägersignalen (msl,ms2) an den Eingang (ET) des Demodulators (DEM) angeordnet sind, und
- daß den Schaltmitteln (MUX) zugeordneten weitere Mittel (BD, SPS, Z) zum Erzeugen eines aus dem ersten analogen Trägersignal (bs) abgeleiteten und den Beginn und das Ende der Phasendifferrenz-Erkennungzeit repräsentierenden Steuersignals (shs) vorgesehen sind.

17. Anordnung nach Anspruch 14,
**dadurch gekennzeichnet,**
- **daß** ein digitaler oder analoger Einstell-Modulator (MOD') zum analogen oder digitalen Modulieren des zweiten Trägersignals (rs) mit der gleichen vorgegebenen Phasenlage angeordnet ist,
- **daß** ein mit dem Einstell-Modulator (MOD') verbundener, analoger oder digitaler Demodulator (DEM) vorgesehen ist, wobei an zwei Eingänge (ED, ET) des Demodulators (DEM) die beiden modulierten Trägersignale (bs, ts) herangeführt sind,
- **daß** der Demodulator (DEM)
-- die Phasendifferenz-Erkennungsmittel zum analogen oder digitalen Ermitteln der Phasendifferenz der beiden modulierten Trägersignale (bs, ts) umfaßt, und
-- Mittel zum Generieren von die ermittelte Phasendifferenz repräsentierenden analogen oder digitalen Phasen-Signalen (is, qs) aufweist, wobei die generierten Phasen-Signale (is, qs) an Ausgänge (AI, AQ) des Demodulators (DEM) geführt sind,
- daß ein über Eingänge (EI; EQ) mit den Ausgängen (AI, AQ) des Demodulators (DEM) verbundener, die Modulationsmittel repräsentierender, digitaler oder analoger Modulator (MOD) vorgesehen ist, welchem die Korrektur-Mittel zur Korrektur der Phasenlage des zweiten Trägersignals (rs) um die ermittelte, durch die anliegenden Phasen-Signale (is, qs) repräsentierte Phasendifferenz nach einer Phasendifferenz-Erkennungszeit zugeordnet sind,
- daß ein weiterer mit dem Modulator (MOD) verbundener, analoger oder digitaler Demodulator (DEM') angeordnet ist, wobei an einen Eingang (ED) des weiteren Demodulators (DEM') das erste analoge Trägersignal (bs) und an einen Eingang (ET) das um die ermittelte Phasendifferenz korrigierte zweite Trägersignal (ts(ms1)) herangeführt ist, und
- daß den Modulatoren (MOD, MOD') und den Demodulatoren (DEM, DEM') weitere Mittel (BD, SPS, Z) zum Erzeugen eines aus dem ersten analogen Trägersignal (bs) abgeleiteten und den Beginn und das Ende der Phasendifferrenz-Erkennungzeit repräsentierenden Steuersignals (shs) zugeordnet sind.

18. Anordnung nach einen der Ansprüche 15 bis 17,
**dadurch gekennzeichnet,**
**daß** ein digitaler Modulator (MOD, MOD') durch digitale Multiplizierer und Addierer realisiert ist, wobei die Phasendifferenz repräsentierende und an den Eingängen (EI, EQ) des digitalen Modulators (MOD, MOD') anliegende, analoge Phasen-Signale (is, qs) durch Umwandlungsmittel analog/digital-gewandelt werden.

19. Anordnung nach einen der Ansprüche 15 bis 18,
**dadurch gekennzeichnet,**
**daß** die Anordnung analoge oder digitale Speichermittel (SH1, 2) zum Speichern der generierten Phasen-Signale (is, qs) aufweist, wobei die Phasen-Signale (is, qs) am Ende der Phasendifferenz-Erkennungszeit durch die Speichermittel (SH1,2) gespeichert und anschließend die gespeicherten Phasen-Signale (is, qs) an die Eingänge (EI, EQ) des Modulators (MOD) geschaltet werden.

20. Anordnung nach Anspruch 19,
**dadurch gekennzeichnet,**
- **daß** analoge Speichermittel (SH1, 2) durch einen Abtast-Speicher-Verstärker (Sample- and Hold-Verstärker), und
- **daß** digitale Speichermittel (SH1,2) durch bistabile Kippstufen realisiert sind

21. Anordnung nach einen der Ansprüche 15 bis 20,
**dadurch gekennzeichnet,**
**daß** im Sinne eines Bildens eines digitalen zweiten Trägersignals (rs) Mittel zum Auslesen von in einem Speicher gespeicherten Werten mit einer bestimmten Auslese-Frequenz vorgesehen sind.

22. Anordnung nach einen der Ansprüche 15 bis 21,
**dadurch gekennzeichnet,**
**daß** die Anordnung zur schnellen Synchronisierung zumindest teilweise durch einen bipolaren ASIC oder FPGA realisiert ist.

23. Anordnung nach Anspruch 14,
**dadurch gekennzeichnet,**
- **daß** eine die Korrekturmittel zur Korrektur der Phasenlage des zweiten Trägersignals umfassende Digital-Einheit (FPGA) vorgesehen ist,
- **daß** ein über Eingänge (ED1...n) mit Ausgängen (AM1...n) der Digital-Einheit (FPGA) verbundener Digital/Analog-Wandler (DA) angeordnet ist, wobei an einen Ausgang (AD) des Digital/Analog-Wandlers (DA) ein eine erste Frequenz (fd) aufweisendes erstes Teil-Trägersignal (rst1) herangeführt ist,
- **daß** ein über einen ersten Eingang (E01) mit dem Ausgang (AD) des Digital/Analog-Wandlers (DA) verbundener Modulator (MOD) angeordnet ist, und
- **daß** eine über einen Ausgang (AU) mit einem zweiten Eingang (E02) des Modulators (MOD) verbundenen Umwandlungseinheit (UE) angeordnet ist, wobei das an einen Eingang (EU) der Umwandlungseinheit (UE) geführte und eine Eingangs-Frequenz (fe) aufweisende zweite Trägersignal (rs) in ein eine Ausgangs-Frequenz (fa) aufweisendes zweites Teil-Trägersignal (rst2) umgewandelt wird,
- **daß** der Modulator (MOD) einen Ausgang (AMO) aufweist, welcher an einen Eingang (ET) eines die Phasendifferenz-Erkennungsmittel repräsentierenden und mit der Digital-Einheit (FPGA) verbundenen Demodulators (DEM) angeschlossen ist, wobei über den Ausgang (AMO) ein mit der vorgegebenen Phasenlage oder mit der um die ermittelte Phasendifferenz korrigierten Phasenlage moduliertes zweites Trägersignal (ts) an den Eingang (ET) übermittelt wird,
- **daß** der Demodulator einen weiteren Eingang (ED) aufweist, an welchen das erste analoge Trägersignal geführt ist,
- **daß** die Digitaleinheit (FPGA), die Umwandlungseinheit (UE) und der Modulator (MOD) derart ausgestaltet sind, daß das modulierte zweite Trägersignal (ts) eine aus der Summe der Frequenzen (fd, fa) der an den Eingängen (EO1,2) des Modulators (MOD) anliegenden ersten und zweiten Teil-Trägersignale (rst1,2) gebildete Frequenz (fm) aufweist.

24. Anordnung nach Anspruch 23,
**dadurch gekennzeichnet,**
- **daß** ein Inphase-Komponente-Ausgang (AI) und ein Quadratur-Komponente-Ausgang (AQ) des Demodulators (DEM) jeweils mit einem ersten und zweiten Analog/Digital-Wandler (AD1,2) verbunden ist,
- **daß** der erste Analog/Digital-Wandler (AD1) mit einem Inphase-Komponente-Eingang (EIF) der Digital-Einheit (FPGA),
- **daß** der zweite Analog/Digital-Wandler (AD2) mit einem Quadratur-Komponente-Eingang (EQF) der Digital-Einheit (FPGA) verbunden ist, wobei
-- durch den ersten Analog/Digital-Wandler (AD1) das die Inphase-Komponente der Phasenlage repräsentierende digitale Phasensignal (dis) und
-- durch den zweiten Analog/Digital-Wandler (AD2) das die Quadratur-Komponente der Phasenlage repräsentierende digitale Phasensignal (dis) gebildet wird.

25. Anordnung nach Anspruch 24,
**dadurch gekennzeichnet,**
- **daß** erste mehrere Eingänge (EP1...n) und Ausgänge (AP1...n) aufweisende und mit dem Inphase-Komponente- und mit dem Quadratur-Komponente-Eingang (EIF, EQF) der Digital-Einheit (FPGA) verbundene, digitale Speichermittel (PSP1, 2) zum Speichern von die vorgebbare Phasenlage repräsentierenden Phasen-Werten (s1,2,wi,wq),
- **daß** mit mehreren Ausgängen (AP1...n) der ersten digitalen Speichermittel (PSP1,2) verbundene digitale Inverter (I1,2) zum Invertieren der in den ersten digitalen Speichermitteln (PSP1,2) gespeicherten Phasen-Werte (s1,2,wi,wq),
- **daß** zweite mit Ausgängen (AI1...n, AP1...n) der Inverter (I1, 2) und der ersten digitalen Speichermittel (PSP1,2) verbundene digitale Speichermittel (SSP1...4) zum Speichern der Phasen-Werte (wi, wq) und der invertierten Phasen-Werte (-wi,-wq),
- **daß** weitere jeweils über mehrere Eingänge (EM1_1...n, EM2_1...n, EM3_1...n, EM4_1...n) mit den Ausgängen (AS1...n) der zweiten digitalen Speichermittel (SSP1...4) verbundene, digitale Multiplex-Mittel (MUX),
- **daß** eine über Takt-Steuerleitungen (sl) mit den ersten und zweiten digitalen Speichermitteln (PSP1,2, SSP1...4) und mit den digitalen Multiplex-Mitteln (MUX) verbundene digitale Takt-Steuereinheit (ST) zum Bilden von Takt-Steuersignalen (st)
-- zur Übernahme der Phasen-Werte (s1, 2, wi,wq) in die ersten digitalen Speichermittel (PSP1,2),
-- zur Übernahme der Phasen-Werte (s1,2, wi,wq) und der invertierten Phasen-Werte (-s1,-s2, -wi,-wq) in die zweiten digitalen Speichermittel (SSP1...4), und
-- zur sequentiellen Übernahme der in den zweiten digitalen Speichermitteln (SSP1...4) gespeicherten Phasen-Werte (s1,2, wi,wq) und der gespeicherten invertierten Phasen-Werte (-s1, -s2, -wi, -wq) an die Ausgänge (AM1...n) der digitalen Multiplex-Mittel,
angeordnet sind, wobei an einen Eingang (EST) der digitalen Takt-Steuereinheit (ST) das zweite Trägersignal (rs) herangeführt ist.

26. Anordnung nach Anspruch 25,
**dadurch gekennzeichnet,**
**daß** die ersten digitalen Speichermittel (PSP1,2) zur Speicherung von Phasen-Werten (wi,wq) ausgestaltet sind, wobei die Phasen-Werte (wi,wq) eine Inphase- und eine Quadratur-Komponente der vorgebbaren Phasenlage repräsentieren.

27. Anordnung nach Anspruch 25 oder 26,
**dadurch gekennzeichnet,**
**daß** die digitalen Multiplex-Mittel (MUX) durch einen mehrere Eingänge (EM1_1...n, EM2_1...n, EM3_1...n, EM4_1...n) und Ausgänge (AM1..n) aufweisenden Multiplexer (MUX) realisiert sind,
- dessen Eingänge (EM1_1...n, EM2_1...n, EM3_1...n, EM4_1...n) jeweils mit den Ausgängen (AS1...n) der zweiten digitalen Speichermittel (SSP1...4) parallel verbunden sind,
- wobei von den Ausgängen (AS1...n) der zweiten Speichermittel (SSP1...4) jeweils die gespeicherten Phasen-Werte (wi,wq) bzw. die gespeicherten, abgeleiteten Phasen-Werte (-wi,-wq) repräsentierende digitale Phasen-Signale (dis, dqs, idis, idqs) an die Eingänge (EM1_1...n, EM2_1...n, EM3_1...n, EM4_1...n) des Multiplexers (MUX) übermittelt werden,
- und der Multiplexer (MUX) derart ausgestaltet ist, daß durch ein von der Takt-Steuereinheit (ST) über eine Steuerleitung (SL) an einen Steuereingang (SS) des Multiplexers (MUX) übermitteltes Takt-Steuersignal (st) die an den Eingängen (EM1_1...n, EM2_1...n, EM3_1...n, EM4_1...n) anliegenden digitalen Phasen-Signale (dis, dqs, idis, idqs) sequentiell mit einer vom Takt-Steuersignal (st) abhängigen Abtastgeschwindigkeit (Δt) an die Ausgänge (AM1...n) durchgeschaltet werden, wodurch das digitale Signal (dms) mit der vorgebbaren, durch die Phasen-Werte (s1, 2, wi, wq) repräsentierten Phasenlage gebildet wird.

28. Anordnung nach einen der Ansprüche 23 oder 27,
**dadurch gekennzeichnet,**
**daß** die Digital-Einheit (FPGA) durch einen ASIC oder einen FPGA realisiert ist.

## Claims

1. Method for the rapid synchronisation of a first analogue carrier signal (bs) generated on the transmit side with a second carrier signal (rs) generated in a receiver,
**characterised in that**
- a preamble of the first carrier signal (bs) is modulated at least partially with a predefined phase relationship on the transmit side,
- the second carrier signal (rs) is modulated with the same predefined phase relationship on the receive side,
- the phase difference between the modulated first carrier signal (bs) and the modulated second carrier signal (ts) is determined and
- after a phase difference identification period the phase relationship of the second carrier signal (rs) is corrected by the determined phase difference.

2. Method according to claim 1,
**characterised in that**
- a second carrier signal (rs) present in analogue form is modulated in an analogue manner with the predefined phase relationship and
- the phase difference between the two modulated carrier signals (bs, ts) is determined in an analogue manner and
- after the phase difference identification period the phase relationship of the second carrier signal (rs) is corrected in an analogue manner by the determined phase difference.

3. Method according to claim 1,
**characterised in that**
- a second carrier signal (rs) present in digital form is modulated digitally with the predefined phase relationship and then converted from digital to analogue and
- the phase difference between the two modulated carrier signals (bs, ts) is determined in an analogue manner and
- after the phase difference identification period the phase relationship of the second carrier signal (rs) is corrected digitally by the determined phase difference.

4. Method according to claim 1,
**characterised in that**
- with a second carrier signal (rs) present in digital form, the first analogue carrier signal (bs) is converted from analogue to digital and
- the phase difference between the two modulated and digitised carrier signals (bs, rs) is determined digitally and
- after the phase difference identification period the phase relationship of the second carrier signal (rs) is corrected digitally by the determined phase difference.

5. Method according to one of the preceding claims,
**characterised in that**
- during the phase difference identification period phase signals (is, qs) representing the phase difference are formed and
- at the end of the phase difference identification period the values of the phase signals (is, qs) are stored and
- after the phase difference identification period the phase relationship of the second carrier signal (rs) is corrected by the phase difference represented by the stored phase signals (is, qs).

6. Method according to claim 5,
**characterised in that** a phase difference determined in an analogue manner is represented by analogue phase signals (is, qs).

7. Method according to claim 6,
**characterised in that** with digital correction of the phase relationship of the second carrier signal (rs) present in digital form, the analogue phase signals (is, qs) are converted from analogue to digital by conversion means.

8. Method according to claim 5,
**characterised in that** a digitally determined phase difference is represented by digital phase signals (is, qs).

9. Method according to claim 1,
**characterised in that**
a digital, modulated second carrier signal is derived from the second carrier signal (rs)
- with the digital, modulated second carrier signal with the predefined phase relationship being formed during the phase difference identification period and
- with the digital, modulated second carrier signal with the phase relationship corrected by the determined phase difference being formed after the phase difference identification period.

10. Method according to claim 9,
**characterised in that**
- the digital, modulated second carrier signal is formed during the phase difference identification period with the aid of phase values (s1, 2) representing the predefined phase relationship and
- digital phase signals (dis, dqs) representing the phase difference are formed during the phase difference identification period and
- the phase values (wi, wq) represented by the digital phase signals (dis, dqs) are stored at the end of the phase difference identification period and
- additional phase values (-wi, -wq) are derived from the stored phase values (wi, wq) and stored and
- the digital, modulated second carrier signal is formed with the aid of the stored phase values (wi, wq) and the stored additional phase values (-wi, -wq) after the phase difference identification period.

11. Method according to claim 9 or 10,
**characterised in that**
- the digital, modulated second carrier signal is converted from digital to analogue and transformed to an analogue first sub-carrier signal (rst1) with the first frequency (fd),
- an analogue second sub-carrier signal (rst2) with a second frequency (fa) is derived from the second carrier signal (rs) and
- the modulated second reference carrier signal (ts) with the predefined phase relationship or the phase relationship corrected by the determined phase difference is formed from the first and second sub-carrier signals (rst1, 2), with the modulated second carrier signal (ts) having a frequency (fm) with the sum of the frequencies (fd, fa) of the first and second sub-carrier frequencies (rst1, 2).

12. Method according to claim 11,
**characterised in that** the modulated second carrier signal (ts) is formed by modulation (MOD) of the first and second sub-carrier signals (rst1, 2).

13. Method according to one of claims 9 to 12,
**characterised in that** the additional phase values (-wi, -wq) are formed by inverting the phase values (wi, wq).

14. Arrangement for the rapid synchronisation of a first analogue carrier signal (bs) generated in a transmit arrangement with a second carrier signal (rs) generated in a receive arrangement,
**characterised by**
- modulation means arranged in the transmit arrangement for at least partial modulation of a preamble of the first carrier signal with a predefined phase relationship and
- the following arranged in the receive arrangement
-- modulation means to modulate the second carrier signal (rs) with the same predefined phase relationship,
-- phase difference identification means to determine the phase difference between the modulated first carrier signal (bs) and the modulated second carrier signal (ts) and
-- correction means to correct the phase relationship of the second carrier signal (rs) by the determined phase difference.

15. Arrangement according to claim 14,
**characterised in that**
- the modulation means are configured as digital or analogue modulators (MOD) for analogue or digital modulation of the second carrier signal (rs) with the same predefined phase relationship and
- an analogue or digital demodulator (DEM) connected to the modulator (MOD) and representing the phase difference identification means is provided, with the two modulated carrier signals (ts, bs) being fed to two inputs (ED, ET) of the demodulator (DEM),
- the demodulator (DEM)
-- having means for analogue or digital determination of the phase difference between the two modulated carrier signals (bs, ts),
and
-- having means for generating analogue or digital phase signals (is, qs) representing the determined phase difference, with the generated phase signals (is, qs) being fed to inputs (EI, EQ) of the modulator (MOD),
- the modulator (MOD) comprises correction means to correct the phase relationship of the second carrier signal (rs) by the determined phase difference represented by the phase signals (is, qs) present after a phase difference identification period and
- further means (BD, SPS, Z) for generating a control signal (shs) derived from the first analogue carrier signal (bs) and representing the start and end of the phase difference identification period are assigned to the modulator (MOD).

16. Arrangement according to claim 14,
**characterised in that**
- a digital or analogue adjustment modulator (MOD') representing the modulation means is provided for the analogue or digital modulation of the second carrier signal (rs) with the same predefined phase relationship and
- an analogue or digital demodulator (DEM) is arranged, with the two modulated carrier signals (bs, ts) being fed to two inputs (ED, ET) of the demodulator (DEM),
- the demodulator (DEM)
-- comprises phase difference identification means for analogue or digital determination of the phase difference between the two modulated carrier signals (bs, ts) and
-- comprises means for generating analogue or digital phase signals (is, qs) representing the determined phase difference, with the generated phase signals (is, qs) being fed to outputs (AI, AQ) of the demodulator (DEM),
- a digital or analogue modulator (MOD) connected via inputs (EI, EQ) to the outputs (AI, AQ) of the demodulator (DEM) is provided, by means of which the correction means are implemented to correct the phase relationship of the second carrier signal (rs) fed to an input (EM) by the determined phase difference represented by the phase signals (is, qs) present after a phase difference identification period,
- switching means (MUX) are arranged for the prompt switching of modulated second carrier signals (ms1, ms2) generated by the modulators (MOD, MOD') to the input (ET) of the demodulator (DEM) and
- further means (BD, SPS, Z) assigned to the switching means (MUX) are provided to generate a control signal (shs) derived from the first analogue carrier signal (bs) and representing the start and end of the phase difference identification period.

17. Arrangement according to claim 14,
**characterised in that**
- a digital or analogue adjustment modulator (MOD') is arranged for the analogue or digital modulation of the second carrier signal (rs) with the same predefined phase relationship,
- an analogue or digital demodulator (DEM) connected to the adjustment modulator (MOD') is provided, with the two modulated carrier signals (bs, ts) being fed to two inputs (ED, ET) of the demodulator (DEM),
- the demodulator (DEM)
-- comprises phase difference identification means for analogue or digital determination of the phase difference between the two modulated carrier signals (bs, ts) and
-- has means for generating analogue or digital phase signals (is, qs) representing the determined phase difference, with the generated phase signals (is, qs) being fed to outputs (AI, AQ) of the demodulator (DEM),
- a digital or analogue modulator (MOD) connected via inputs (EI, EQ) to the outputs (AI, AQ) of the demodulator (DEM) and representing the modulation means is provided, to which the correction means for correcting the phase relationship of the second carrier signal (rs) by the determined phase difference represented by the phase signals (is, qs) present are assigned after a phase difference identification period,
- a further analogue or digital demodulator (DEM') connected to the modulator (MOD) is arranged, with the first analogue carrier signal (bs) being fed to an input (ED) of the further demodulator (DEM') and the second carrier signal (ts(ms1)) corrected by the determined phase difference being fed to an input (ET) and
- further means (BD, SPS, Z) for generating a control signal (shs) derived from the first analogue carrier signal (bs) and representing the start and end of the phase difference identification period are assigned to the modulators (MOD, MOD') and demodulators (DEM, DEM').

18. Arrangement according to one of claims 15 to 17,
**characterised in that**
a digital modulator (MOD, MOD') is implemented by digital multipliers and adders, with analogue phase signals (is, qs) representing the phase difference and present at the inputs (EI, EQ) of the digital modulator (MOD, MOD') being converted from analogue to digital by conversion means.

19. Arrangement according to one of claims 15 to 18,
**characterised in that**
the arrangement has analogue or digital storage means (SH1, 2) for storing the generated phase signals (is, qs), with the phase signals (is, qs) being stored by the storage means (SH1, 2) at the end of the phase difference identification period and the stored phase signals (is, qs) then being switched to the inputs (EI, EQ) of the modulator (MOD).

20. Arrangement according to claim 19,
**characterised in that**
- analogue storage means (SH1, 2) are implemented by a sample and hold amplifier and
- digital storage means (SH1, 2 are implemented by bi-stable trigger elements.

21. Arrangement according to one of claims 15 to 20,
**characterised in that**
- means for reading values stored in a storage unit with a defined read frequency are provided with a view to forming a digital second carrier signal (rs).

22. Arrangement according to one of claims 15 to 21,
**characterised in that**
the arrangement for rapid synchronisation is implemented at least partially by a bipolar ASIC or FPGA.

23. Arrangement according to claim 14,
**characterised in that**
- a digital unit (FPGA) comprising the correction means to correct the phase relationship of the second carrier signal is provided,
- a digital/analogue converter DA connected via inputs (ED1 ... n) to outputs (AM1 ... n) of the digital unit (FPGA) is arranged, with a first sub-carrier signal (rst1) having a first frequency (fd) being fed to an output (AD) of the digital/analogue converter (DA),
- a modulator (MOD) connected via a first input (EO1) to the output (AD) of the digital/analogue converter (DA) is arranged and
- a conversion unit (UE) connected via an output (AU) to a second input (EO2) of the modulator (MOD) is arranged, with the second carrier signal (rs) fed to an input (EU) of the conversion unit (UE) and having an input frequency (fe) is converted to a second sub-carrier signal (rst2) having an output frequency (fa),
- the modulator (MOD) has an output (AMO), which is linked to an input (ET) of a demodulator (DEM) representing the phase difference identification means and connected to the digital unit (FPGA), with a second carrier signal (ts) modulated with the predefined phase relationship or with the phase relationship corrected by the determined phase difference being transmitted via the output (AMO) to the input (ET),
- the demodulator has a further input (ED), to which the first analogue carrier signal is fed,
- the digital unit (FPGA), the conversion unit (UE) and the modulator (MOD) are configured such that the modulated second carrier signal (ts) has a frequency (fm) formed from the sum of the frequencies (fd, fa) of the first and second sub-carrier signals (rst1, 2) present at the inputs (EO1, 2) of the modulator (MOD).

24. Arrangement according to claim 23,
**characterised in that**
- an in-phase component output (AI) and a quadrature component output (AQ) of the demodulator (DEM) are connected respectively to a first and second analogue/digital converter (AD1, 2),
- the first analogue/digital converter (AD1) is connected to an in-phase component input (EIF) of the digital unit (FPGA)
- the second analogue/digital converter (AD2) is connected to a quadrature component input (EQF) of the digital unit (FPGA), with
-- the digital phase signal (dis) representing the in-phase component of the phase relationship being formed by the first analogue/digital converter (AD1) and
- the digital phase signal (dis) representing the quadrature component of the phase relationship being formed by the second analogue/digital converter (AD2).

25. Arrangement according to claim 24,
**characterised in that**
- first digital storage means (PSP1, 2) having a number of inputs (EP1 ... n) and outputs (AP1 ... n) and connected to the in-phase component and quadrature component inputs (EIF, EQF) of the digital unit (FPGA) to store phase values (s1, 2, wi, wq) representing the predefinable phase relationship,
- digital inverters (I1, 2) for inverting the phase values (s1, 2, wi, wq) stored in the first digital storage means (PSP1, 2) connected to a number of outputs (AP1 ... n) of the first digital storage means (PSP1, 2),
- second digital storage means (SSP1 ... 4) connected to outputs (AI1 ... n, AP1 ... n) of the inverters (11, 2) and the first digital storage means (PSP1, 2) to store the phase values (wi, wq) and the inverted phase values (-wi, -wq),
- further digital multiplex means (MUX) connected respectively via a number of inputs (EM1_1 ... n, EM2_1 ... n, EM3_1 ... n, EM4_1 ... n) to the outputs (AS1 ... n) of the second digital storage means (SSP1 ... 4),
- a digital clock control unit (ST) connected via clock control lines (sl) to the first and second digital storage means (PSP1, 2, SSP1 ... 4) and to the digital multiplex means (MUX) to form clock control signals (st) are arranged
-- to transfer the phase values (s1, 2, wi, wq) to the first digital storage means (PSP1, 2),
-- to transfer the phase values (s1, 2, wi, wq) and inverted phase values (-s1, -s2, -wi, -wq) to the second digital storage means (SSP1 ... 4) and
-- to transfer the phase values (s1, 2, wi, wq) stored in the second digital storage means (SSP1 ... 4) and the stored inverted phase values (-s1, -s2, -wi, -wq) sequentially to the outputs (AM1 ... n) of the digital multiplex means,
with the second carrier signal (rs) being fed to an input (EST) of the digital clock control unit (ST).

26. Arrangement according to claim 25,
**characterised in that**
the first digital storage means (PSP1, 2) are configured to store phase values (wi, wq), with the phase values (wi, wq) representing an in-phase and quadrature component of the predefinable phase relationship.

27. Arrangement according to claim 25 or 26,
**characterised in that**
the digital multiplex means (MUX) are implemented by a multiplexer (MUX) having a number of inputs (EM1_1 ... n, EM2_1 ... n, EM3_1 ... n, EM4_1 ... n) and outputs (AM1 ... n),
- the inputs (EM1_1 ... n, EM2_1 ... n, EM3_1 ... n, EM4_1 ... n) of which are connected respectively to the outputs (AS1 ... n) of the digital storage means (SSP1 ... 4),
- with digital phase signals (dis, dqs, idis, idqs) representing the stored phase values (wi, wq) and the stored derived phase values (-wi, -wq) respectively being transmitted from the outputs (AS1 ... n) of the second storage means (SSP1 ... 4) to the inputs (EM1_1 ... n, EM2_1 ... n, EM3_1 ... n, EM4_1 ... n) of the multiplexer (MUX),
- and the multiplexer (MUX) being configured such that the digital phase signals (dis, dqs, idis, idqs) present at the inputs (EM1_1 ... n, EM2_1 ... n, EM3_1 ... n, EM4_1 ... n) are switched by a clock control signal (st) transmitted from the clock control unit (ST) via a control line (SL) to a control input (SS) of the multiplexer (MUX) sequentially through to the outputs (AM1 ... n) with a scan speed (Δt) that is a function of the clock control signal (st), as a result of which the digital signal (dms) is formed with the predefinable phase relationship represented by the phase values (s1, 2, wi, wq).

28. Arrangement according to one of claims 23 or 27,
**characterised in that**
the digital unit (FPGA) is implemented by an ASIC or an FPGA.

## Revendications

1. Procédé pour la synchronisation rapide d'un premier signal porteur analogique (bs), généré côté émission, avec un deuxième signal porteur (rs), généré dans un récepteur,
**caractérisé**
- **en ce que** côté émission, un préambule du premier signal porteur (bs) est modulé au moins partiellement avec une position de phase prédéfinie,
- **en ce que** côté réception, le deuxième signal porteur (rs) est modulé avec la même position de phase prédéfinie,
- **en ce que** la différence de phase du premier signal porteur modulé (bs) et du deuxième signal porteur modulé (ts) est déterminée, et
- **en ce qu'**après un temps de détection de la différence de phase, la position de phase du deuxième signal porteur (rs) est corrigée de la différence de phase déterminée.

2. Procédé selon la revendication 1,
**caractérisé**
- **en ce qu'**en présence d'un deuxième signal porteur analogique (rs), celui-ci est modulé analogiquement avec la position de phase prédéfinie, et
- **en ce que** la différence de phase des deux signaux porteurs modulés (bs, ts) est déterminée analogiquement, et
- **en ce qu'**après le temps de détection de la différence de phase, la position de phase du deuxième signal porteur (rs) est corrigée analogiquement de la différence de phase déterminée.

3. Procédé selon la revendication 1,
**caractérisé**
- **en ce qu'**en présence d'un deuxième signal porteur numérique (rs), celui-ci est modulé numériquement avec la position de phase prédéfinie et puis soumis à une conversion numérique-analogique, et
- **en ce que** la différence de phase des deux signaux porteurs modulés (bs, ts) est déterminée analogiquement, et
- **en ce qu'**après le temps de détection de la différence de phase, la position de phase du deuxième signal porteur (rs) est corrigée numériquement de la différence de phase déterminée.

4. Procédé selon la revendication 1,
**caractérisé**
- **en ce qu'**en présence d'un deuxième signal porteur numérique (rs), le premier signal porteur analogique (bs) est soumis à une conversion analogique-numérique, et
- **en ce que** la différence de phase des deux signaux porteurs modulés et numérisés (bs, rs) est déterminée numériquement, et
- **en ce qu'**après le temps de détection de la différence de phase, la position de phase du deuxième signal porteur (rs) est corrigée numériquement de la différence de phase déterminée.

5. Procédé selon l'une des revendications précédentes,
**caractérisé**
- **en ce que** pendant le temps de détection de la différence de phase, des signaux de phase (is, qs) représentant la différence de phase sont formés, et
- **en ce qu'**à la fin du temps de détection de la différence de phase, les valeurs des signaux de phase (is, qs) sont mises en mémoire, et
- **en ce qu'**après le temps de détection de la différence de phase, la position de phase du deuxième signal porteur (rs) est corrigée de la différence de phase représentée par les signaux de phase (is, qs) mis en mémoire.

6. Procédé selon la revendication 5,
**caractérisé en ce que**
dans le cas d'une différence de phase déterminée analogiquement, celle-ci est représentée par des signaux de phase analogiques (is, qs).

7. Procédé selon la revendication 6,
**caractérisé en ce que**
dans le cas d'une correction numérique de la position de phase du deuxième signal porteur numérique (rs), les signaux de phase analogiques (is, qs) sont soumis par des moyens de conversion à une conversion analogique-numérique.

8. Procédé selon la revendication 5,
**caractérisé en ce que**
dans le cas d'une différence de phase déterminée numériquement, celle-ci est représentée par des signaux de phase numériques (is, qs).

9. Procédé selon la revendication 1,
**caractérisé en ce que**
à partir du deuxième signal porteur (rs) est déduit un deuxième signal porteur numérique modulé,
- le deuxième signal porteur numérique modulé avec la position de phase prédéfinie étant formé pendant le temps de détection de la différence de phase, et
- le deuxième signal porteur numérique modulé avec la position de phase corrigée de la différence de phase déterminée étant formé après le temps de détection de la différence de phase.

10. Procédé selon la revendication 9,
**caractérisé**
- **en ce que** pendant le temps de détection de la différence de phase, le deuxième signal porteur numérique modulé est formé à l'aide de valeurs de phase (s1, 2) représentant la position de phase prédéfinie, et
- **en ce que** pendant le temps de détection de la différence de phase, des signaux de phase numériques (dis, dqs) représentant la différence de phase sont formés, et
- **en ce qu'**à la fin du temps de détection de la différence de phase, les valeurs de phase (wi, wq) représentées par les signaux de phase numériques (dis, dqs) sont mises en mémoire, et
- **en ce qu'**à partir des valeurs de phase (wi, wq) mises en mémoire, des valeurs de phase supplémentaires (-wi, -wq) sont déduites et mises en mémoire, et
- **en ce qu'**après le temps de détection de la différence de phase, le deuxième signal porteur numérique modulé est formé à l'aide des valeurs de phase (wi, wq) mises en mémoire et des valeurs de phase supplémentaires (-wi, -wq) mises en mémoire.

11. Procédé selon la revendication 9 ou 10,
**caractérisé**
- **en ce que** le deuxième signal porteur numérique modulé est soumis à une conversion numérique-analogique et converti en un premier signal porteur partiel analogique (rst1) avec la première fréquence (fd),
- **en ce qu'**à partir du deuxième signal porteur (rs) est déduit un deuxième signal porteur partiel analogique (rst2) avec une deuxième fréquence (fa), et
- **en ce qu'**à partir du premier et deuxième signal porteur partiel (rst1, 2) est formé le deuxième signal porteur de référence modulé (ts) avec la position de phase prédéfinie ou avec la position de phase corrigée de la différence de phase déterminée, le deuxième signal porteur modulé (ts) présentant une fréquence (fm) présentant la somme des fréquences (fd, fa) des premier et deuxième signaux porteurs partiels (rst1, 2).

12. Procédé selon la revendication 11,
**caractérisé en ce que**
le deuxième signal porteur modulé (ts) est formé par modulation (MOD) du premier avec le deuxième signal porteur partiel (rst1, 2).

13. Procédé selon l'une des revendications 9 à 12,
**caractérisé en ce que**
les valeurs de phase supplémentaires (-wi, -wq) sont formées par inversion des valeurs de phase (wi, wq).

14. Dispositif pour la synchronisation rapide d'un premier signal porteur analogique (bs), généré dans un dispositif d'émission, avec un deuxième signal porteur (rs), généré dans un dispositif de réception,
**caractérisé par**
- des moyens de modulation disposés dans le dispositif d'émission, destinés à moduler au moins partiellement un préambule du premier signal porteur avec une position de phase prédéfinie, et,
- disposés dans le dispositif de réception,
-- des moyens de modulation destinés à moduler le deuxième signal porteur (rs) avec la même position de phase prédéfinie,
-- des moyens de détection de la différence de phase, destinés à déterminer la différence de phase du premier signal porteur modulé (bs) et du deuxième signal porteur modulé (ts), et
-- des moyens de correction destinés à corriger la position de phase du deuxième signal porteur (rs) de la différence de phase déterminée.

15. Dispositif selon la revendication 14,
**caractérisé**
- **en ce que** les moyens de modulation sont configurés comme modulateur (MOD) numérique ou analogique pour la modulation analogique ou numérique du deuxième signal porteur (rs) avec la même position de phase prédéfinie, et
- **en ce qu'**il est prévu un démodulateur (DEM) analogique ou numérique relié au modulateur (MOD) et représentant les moyens de détection de la différence de phase, les deux signaux porteurs modulés (ts, bs) étant amenés à deux entrées (ED, ET) du démodulateur (DEM),
- **en ce que** le démodulateur (DEM) présente
-- des moyens pour déterminer analogiquement ou numériquement la différence de phase des deux signaux porteurs modulés (bs, ts) et
-- des moyens pour générer des signaux de phase (is, qs) analogiques ou numériques représentant la différence de phase déterminée, les signaux de phase (is, qs) générés étant amenés à des entrées (EI, EQ) du modulateur (MOD),
- en ce que le modulateur (MOD) comprend les moyens de correction pour corriger, après un temps de détection de la différence de phase, la position de phase du deuxième signal porteur (rs) de la différence de phase déterminée et représentée par les signaux de phase (is, qs) appliqués, et
- en ce que d'autres moyens (BD, SPS, Z) sont associés au modulateur (MOD), destinés à générer un signal de commande (shs) déduit à partir du premier signal porteur analogique (bs) et représentant le début et la fin du temps de détection de la différence phase.

16. Dispositif selon la revendication 14,
**caractérisé**
- **en ce qu'**il est prévu un modulateur d'ajustage (MOD') numérique ou analogique représentant les moyens de modulation pour la modulation analogique ou numérique du deuxième signal porteur (rs) avec la même position de phase prédéfinie, et
- **en ce qu'**il est prévu un démodulateur (DEM) analogique ou numérique, les deux signaux porteurs modulés (bs, ts) étant amenés à deux entrées (ED, ET) du démodulateur (DEM),
- **en ce que** le démodulateur (DEM) comprend
-- les moyens de détection de la différence de phase, destinés à déterminer analogiquement ou numériquement la différence de phase des deux signaux porteurs modulés (bs, ts), et
-- des moyens destinés à générer des signaux de phase (is, qs) analogiques ou numériques représentant la différence de phase déterminée, les signaux de phase (is, qs) générés étant amenés à des sorties (AI, AQ) du démodulateur (DEM),
- en ce qu'il est prévu un modulateur (MOD) numérique ou analogique relié à travers des entrées (EI, EQ) aux sorties (AI, AQ) du démodulateur (DEM) et à l'aide duquel sont réalisés les moyens de correction pour corriger, après un temps de détection de la différence de phase, la position de phase du deuxième signal porteur (rs), amené à une entrée EM, de la différence de phase déterminée et représentée par les signaux de phase (is, qs) appliqués,
- en ce qu'il est prévu des moyens de commutation (MUX) destinés à commuter en temps voulu des deuxièmes signaux porteurs modulés (msl, ms2), générés par les modulateurs (MOD, MOD'), sur l'entrée (ET) du démodulateur (DEM), et
- en ce qu'il est prévu d'autres moyens (BD, SPS, Z) associés aux moyens de commutation (MUX) et destinés à générer un signal de commande (shs) déduit à partir du premier signal porteur analogique (bs) et représentant le début et la fin du temps de détection de la différence de phase.

17. Dispositif selon la revendication 14,
**caractérisé**
- **en ce qu'**il est prévu un modulateur d'ajustage (MOD') numérique ou analogique pour la modulation analogique ou numérique du deuxième signal porteur (rs) avec la même position de phase prédéfinie,
- **en ce qu'**il est prévu un démodulateur (DEM) analogique ou numérique relié au modulateur d'ajustage (MOD'), les deux signaux porteurs modulés (bs, ts) étant amenés à deux entrées (ED, ET) du démodulateur (DEM),
- **en ce que** le démodulateur (DEM) présente
-- les moyens de détection de la différence de phase, destinés à déterminer analogiquement ou numériquement la différence de phase des deux signaux porteurs modulés (bs, ts), et
-- des moyens destinés à générer des signaux de phase (is, qs) analogiques ou numériques représentant la différence de phase déterminée, les signaux de phase (is, qs) générés étant amenés à des sorties (AI, AQ) du démodulateur (DEM),
- en ce qu'il est prévu un modulateur (MOD) numérique ou analogique relié à travers des entrées (EI, EQ) aux sorties (AI, AQ) du démodulateur (DEM) et représentant les moyens de modulation, auquel sont associés les moyens de correction pour corriger, après un temps de détection de la différence de phase, la position de phase du deuxième signal porteur (rs) de la différence de phase déterminée et représentée par les signaux de phase (is, qs) appliqués,
- en ce qu'il est prévu un autre démodulateur (DEM') analogique ou numérique relié au modulateur (MOD), le premier signal porteur analogique (bs) étant amené à une entrée (ED) de l'autre démodulateur (DEM') et le deuxième signal porteur (ts(ms1)), corrigé de la différence de phase déterminée, à une entrée (ET), et
- en ce que d'autres moyens (BD, SPS, Z) sont associés aux modulateurs (MOD, MOD') et aux démodulateurs (DEM, DEM'), destinés à générer un signal de commande (shs) déduit à partir du premier signal porteur analogique (bs) et représentant le début et la fin du temps de détection de la différence de phase.

18. Dispositif selon l'une des revendications 15 à 17,
**caractérisé en ce que**
un modulateur numérique (MOD, MOD') est réalisé par des multiplicateurs et additionneurs numériques, les signaux de phase (is, qs) analogiques, représentant la différence de phase et appliqués aux sorties (EI, EQ) du modulateur numérique (MOD, MOD'), étant soumis par des moyens de conversion à une conversion analogique-numérique.

19. Dispositif selon l'une des revendications 15 à 18,
**caractérisé en ce que**
le dispositif comprend des moyens de mémorisation (SH1, 2) analogiques ou numériques pour la mise en mémoire des signaux de phase (is, qs) générés, les signaux de phase (is, qs) étant mis en mémoire par les moyens de mémorisation (SH1, 2) à la fin du temps de détection de la différence de phase et puis les signaux de phase (is, qs) mis en mémoire étant commutés sur les entrées (EI, EQ) du modulateur (MOD).

20. Dispositif selon la revendication 19,
**caractérisé en ce que**
- des moyens de mémorisation analogiques (SH1, 2) sont réalisés par un amplificateur d'échantillonnage et de maintien (amplificateur sample and hold) et
- des moyens de mémorisation numériques (SH1, 2) par des bascules électroniques bistables.

21. Dispositif selon l'une des revendications 15 à 20,
**caractérisé en ce que**
dans l'esprit de former un deuxième signal porteur numérique (rs), des moyens sont prévus pour extraire des valeurs mémorisées dans une mémoire avec une fréquence d'extraction déterminée.

22. Dispositif selon l'une des revendications 15 à 21,
**caractérisé en ce que**
le dispositif de synchronisation rapide est réalisé au moins partiellement par un ASIC ou FPGA bipolaire.

23. Dispositif selon la revendication 14,
**caractérisé**
- **en ce qu'**il est prévu une unité numérique (FPGA) comprenant les moyens de correction pour corriger la position de phase du deuxième signal porteur,
- **en ce qu'**il est prévu un convertisseur numérique-analogique (DA) relié à travers des entrées (ED1...n) à des sorties (AM1...n) de l'unité numérique (FPGA), un premier signal porteur partiel (rst1) présentant une première fréquence (fd) étant amené à une sortie (AD) du convertisseur numérique-analogique (DA),
- **en ce qu'**il est prévu un modulateur (MOD) relié à travers une première entrée (EO1) à la sortie (AD) du convertisseur numérique-analogique (DA), et
- **en ce qu'**il est prévu une unité de conversion (UE) reliée à travers une sortie (AU) à une deuxième entrée (E02) du modulateur (MOD), le deuxième signal porteur (rs) amené à une entrée (EU) de l'unité de conversion (UE) et présentant une fréquence d'entrée (fe) étant converti en un deuxième signal porteur partiel (rst2) présentant une fréquence de sortie (fa),
- **en ce que** le modulateur (MOD) comporte une sortie (AMO) laquelle est raccordée à une entrée (ET) d'un démodulateur (DEM) représentant les moyens de détection de la différence de phase et relié à l'unité numérique (FPGA), un deuxième signal porteur modulé (ts) avec la position de phase prédéfinie ou avec la position de phase corrigée de la différence de phase déterminée étant transmis à travers la sortie (AMO) à l'entrée (ET),
- **en ce que** le démodulateur comporte une autre sortie (ED) à laquelle est amené le premier signal porteur analogique,
- **en ce que** l'unité numérique (FPGA), l'unité de conversion (UE) et le modulateur (MOD) sont configurés de telle manière que le deuxième signal porteur modulé (ts) présente une fréquence (fm) formée de la somme des fréquences (fd, fa) des premier et deuxième signaux porteurs partiels (rst1, 2) appliqués aux entrées (EO1, 2) du modulateur (MOD).

24. Dispositif selon la revendication 23,
**caractérisé**
- **en ce qu'**une sortie de composante en phase (AI) et une sortie de composante en quadrature (AQ) du démodulateur (DEM) sont reliées respectivement à un premier et deuxième convertisseur analogique-numérique (AD1, 2),
- **en ce que** le premier convertisseur analogique-numérique (AD1) est relié à une entrée de composante en phase (EIF) de l'unité numérique (FPGA),
- **en ce que** le deuxième convertisseur analogique-numérique (AD2) est relié à une entrée de composante en quadrature (EQF) de l'unité numérique (FPGA),
-- le signal de phase numérique (dis) représentant la composante en phase de la position de phase étant formé par le premier convertisseur analogique-numérique (AD1) et
-- le signal de phase numérique (dis) représentant la composante en quadrature de la position de phase étant formé par le deuxième convertisseur analogique-numérique (AD2).

25. Dispositif selon la revendication 24,
**caractérisé**
- **en ce qu'**il est prévu des premiers moyens de mémorisation numériques (PSP1, 2) comportant plusieurs entrées (EP1...n) et sorties (AP1...n) et reliés à l'entrée de composante en phase et à l'entrée de composante en quadrature (EIF, EQF) de l'unité numérique (FPGA), pour mettre en mémoire des valeurs de phase (s1, 2, wi, wq) représentant la position de phase prédéfinissable,
- **en ce qu'**il est prévu des inverseurs numériques (I1, 2) reliés à plusieurs sorties (Ap1...n) des premiers moyens de mémorisation numériques (PSP1, 2), pour inverser les valeurs de phase (s1, 2, wi, wq) mises en mémoire dans les premiers moyens de mémorisation numériques (PSP1, 2),
- **en ce qu'**il est prévu des deuxièmes moyens de mémorisation numériques (SSP1...4) reliés à des sorties (AIl...n, AP1...n) des inverseurs (I1, 2) et des premiers moyens de mémorisation numériques (PSP1, 2), pour mettre en mémoire les valeurs de phase (wi, wq) et les valeurs de phase inversées (-wi, -wq),
- **en ce qu'**il est prévu d'autres moyens de multiplexage numériques (MUX) reliés respectivement à travers plusieurs entrées (EM1_1...n, EM2_1...n, EM3_1...n, EM4_1...n) aux sorties (AS1...n) des deuxièmes moyens de mémorisation numériques (SSP1...4),
- **en ce qu'**il est prévu une unité de commande d'horloge numérique (ST) reliée à travers des lignes de commande d'horloge (s1) aux premiers et deuxièmes moyens de mémorisation numériques (PSP1, 2, SSP1...4) et aux moyens de multiplexage numériques (MUX) et destinée à former des signaux de commande d'horloge (st)
-- pour le transfert des valeurs de phase (s1, 2, wi, wq) dans les premiers moyens de mémorisation numériques (PSP1, 2),
-- pour le transfert des valeurs de phase (s1, 2, wi, wq) et des valeurs de phase inversées (-s1, -s2, -wi, -wq) dans les deuxièmes moyens de mémorisation numériques (SSP1...4) et
-- pour le transfert séquentiel des valeurs de phase (s1, 2, wi, wq) mises en mémoire dans les deuxièmes moyens de mémorisation numériques (SSP1...4) et des valeurs de phase inversées (-s1, -s2, -wi, -wq) mises en mémoire sur les sorties (AM1...n) des moyens de multiplexage numériques, le deuxième signal porteur (rs) étant amené à une entrée (EST) de l'unité de commande d'horloge numérique (ST).

26. Dispositif selon la revendication 25,
**caractérisé en ce que**
les premiers moyens de mémorisation numériques (PSP1, 2) sont configurés pour la mise en mémoire de valeurs de phase (wi, wq), les valeurs de phase (wi, wq) représentant une composante en phase et une composante en quadrature de la position de phase prédéfinissable.

27. Dispositif selon la revendication 25 ou 26,
**caractérisé en ce que**
les moyens de multiplexage numériques (MUX) sont réalisés par un multiplexeur (MUX) comportant plusieurs entrées (EM1_1...n, EM2_1...n, EM3_1...n, EM4_1...n) et sorties (AM1...n),
- dont les entrées (EM1_1...n, EM2_1...n, EM3_1...n, EM4_1...n) sont reliées respectivement, en parallèle, aux sorties (AS1...n) des deuxièmes moyens de mémorisation numériques (SSP1...4),
- des signaux de phase numériques (dis, dqs, idis, idqs) représentant respectivement les valeurs de phase (wi, wq) mises en mémoire resp. les valeurs de phase déduites (-wi, -wq) mises en mémoire étant transmis des sorties (AS1...n) des deuxièmes moyens de mémorisation (SSP1...4) aux entrées (EM1_1...n, EM2_1...n, EM3_1...n, EM4_1...n) du multiplexeur (MUX),
- et **en ce que** le multiplexeur (MUX) est configuré de telle manière qu'à l'aide d'un signal de commande d'horloge (st) transmis de l'unité de commande d'horloge (ST) à travers une ligne de commande (SL) à une entrée de commande (SS) du multiplexeur (MUX), les signaux de phase numériques (dis, dqs, idis, idqs) appliqués aux entrées (EM1_1...n, EM2_1...n, EM3_1...n, EM4_1...n) sont commutés séquentiellement, à une vitesse d'échantillonnage (Δt) dépendante du signal de commande d'horloge (st), sur les sorties (Am1...n), formant ainsi le signal numérique (dms) avec la position de phase prédéfinissable représentée par les valeurs de phase (s1, 2, wi, wq).

28. Dispositif selon la revendication 23 ou 27,
**caractérisé en ce que**
l'unité numérique (FPGA) est réalisée par un ASIC ou un FPGA.
